(19) Europäisches Patentamt
European Patent Office
Office européen des brevets

(11) **EP 4 625 902 A1**

(12) **EUROPEAN PATENT APPLICATION**
published in accordance with Art. 153(4) EPC

(43) Date of publication:
**01.10.2025 Bulletin 2025/40**

(21) Application number: **22966058.4**

(22) Date of filing: **21.11.2022**

(51) International Patent Classification (IPC):
**H04L 27/00** $^{(2006.01)}$

(52) Cooperative Patent Classification (CPC):
**H04L 27/00**

(86) International application number:
**PCT/CN2022/133321**

(87) International publication number:
**WO 2024/108356 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **XIAO, Han
Dongguan, Guangdong 523860 (CN)**

(74) Representative: **Taor, Simon Edward William et al
Venner Shipley LLP
200 Aldersgate
London EC1A 4HD (GB)**

(54) **CSI FEEDBACK METHOD, TRANSMITTER DEVICE AND RECEIVER DEVICE**

(57) A method for channel state information (CSI) feedback, a transmitting device, and a receiving device are provided in implementations of the present disclosure. A set of CSI samples is clustered to obtain cluster centers, the cluster centers obtained through clustering are taken as a CSI feedback codebook, and a CSI feedback implemented based on the CSI feedback codebook can have performance advantages of specific data-driven scenarios, thereby improving the CSI feedback performance. The method for CSI feedback includes the following. A transmitting device encodes target CSI information according to the CSI feedback codebook, to obtain a target feedback bitstream. The transmitting device transmits the target feedback bitstream. The CSI feedback codebook is $K$ cluster centers obtained by clustering CSI samples in a first dataset, the first dataset includes $S$ CSI samples, $K$ and $S$ are positive integers, $K=2^B<S$, and $B$ is the number of CSI feedback bits.

**200**

```
TRANSMITTING DEVICE                                    RECEIVING DEVICE

S210, TRANSMITTING DEVICE ENCODES TARGET CSI
INFORMATION ACCORDING TO CSI FEEDBACK
CODEBOOK, TO OBTAIN TARGET FEEDBACK BITSTREAM,
WHERE CSI FEEDBACK CODEBOOK IS K CLUSTER
CENTERS OBTAINED BY CLUSTERING CSI SAMPLES IN
FIRST DATASET, FIRST DATASET INCLUDES S CSI
SAMPLES, K AND S ARE POSITIVE INTEGERS, K=2^B<S, AND
B IS THE NUMBER OF CSI FEEDBACK BITS

        S220, TRANSMITTING DEVICE TRANSMITS THE TARGET
        FEEDBACK BITSTREAM

                              S230, RECEIVING DEVICE RECEIVES
                              TARGET FEEDBACK BITSTREAM

                     S240, RECEIVING DEVICE DECODES TARGET FEEDBACK
                     BITSTREAM ACCORDING TO CSI FEEDBACK CODEBOOK,
                     TO OBTAIN TARGET CSI SAMPLE
```

FIG. 8

**Description**

TECHNICAL FIELD

This disclosure relates to the field of communication, in particular to a method for channel state information (CSI) feedback, a transmitting device, and a receiving device.

BACKGROUND

In a new radio (NR) system, a terminal device is required to feed back channel state information (CSI) to a network device, such that the CSI is used by the network device to determine a precoding matrix for downlink (DL) transmission. Specifically, a CSI feedback mainly utilizes a solution based on a CSI feedback codebook to realize the extraction and feedback of channel features. In other words, after a transmitting end performs channel estimation and obtains a corresponding precoding matrix based on the channel estimation result, the transmitting end selects, according to a certain optimization criterion, a precoding matrix that most closely matches the precoding matrix to be fed back from a preset CSI feedback codebook, and feeds back information such as an index of the matrix to a receiving end through an air interface feedback link, such that the receiving end can realize precoding.

However, the method for CSI feedback cannot meet the requirements for CSI feedback in the evolution of communication systems.

SUMMARY

A method for channel state information (CSI) feedback, a transmitting device, and a receiving device are provided in implementations of the present disclosure. A set of CSI samples is clustered to obtain cluster centers, the cluster centers obtained through clustering are taken as a CSI feedback codebook, and a CSI feedback implemented based on the CSI feedback codebook can have performance advantages of specific data-driven scenarios, thereby improving the CSI feedback performance.

In a first aspect, a method for CSI feedback is provided. The method includes the following. A transmitting device encodes target CSI information according to a CSI feedback codebook, to obtain a target feedback bitstream. The transmitting device transmits the target feedback bitstream. The CSI feedback codebook is $K$ cluster centers obtained by clustering CSI samples in a first dataset, the first dataset includes $S$ CSI samples, $K$ and $S$ are positive integers, $K=2^B<S$, and $B$ is the number of CSI feedback bits.

In a second aspect, a method for CSI feedback is provided. The method includes the following. A receiving device receives a target feedback bitstream. The receiving device decodes the target feedback bitstream according to a CSI feedback codebook, to obtain a target CSI sample. The CSI feedback codebook is $K$ cluster centers obtained by clustering CSI samples in a first dataset, the first dataset includes $S$ CSI samples, $K$ and $S$ are positive integers, $K=2^B<S$, and $B$ is the number of CSI feedback bits.

In a third aspect, a transmitting device is provided. The transmitting device is configured to implement the method in the first aspect.

Specifically, the transmitting device includes functional modules configured to implement the method in the first aspect.

In a fourth aspect, a receiving device is provided. The receiving device is configured to implement the method in the second aspect.

Specifically, the receiving device includes functional modules configured to implement the method in the second aspect.

In a fifth aspect, a transmitting device is provided. The transmitting device includes a processor and a memory. The memory is configured to store a computer program. The processor is configured to invoke and execute the computer program stored in the memory, to cause the transmitting device to implement the method in the first aspect.

In a sixth aspect, a receiving device is provided. The receiving device includes a processor and a memory. The memory is configured to store a computer program. The processor is configured to invoke and execute the computer program stored in the memory, to cause the receiving device to implement the method in the second aspect.

In a seventh aspect, an apparatus is provided. The apparatus is configured to implement the method in any of the first aspect and the second aspect.

Specifically, the apparatus includes a processor. The processor is configured to invoke and execute a computer program stored in a memory, to cause a device equipped with the apparatus to implement the method in any of the first aspect and the second aspect.

In an eighth aspect, a computer-readable storage medium is provided. The computer-readable storage medium is configured to store a computer program that causes a computer to implement the method in any of the first aspect and the second aspect.

In a ninth aspect, a computer program product is provided. The computer program product includes computer program instructions that cause a computer to implement the method in any of the first aspect and the second aspect.

In a tenth aspect, a computer program is provided. The computer program, when executed on a computer, causes the computer to implement the method in any of the first aspect and the second aspect.

Through the technical solutions, the CSI samples in the first dataset are clustered to obtain the $K$ cluster centers, the $K$ cluster centers obtained through clustering are taken as the CSI feedback codebook corresponding to the first dataset, and the CSI feedback implemented based on the CSI feedback codebook can have performance advantages of specific data-driven scenarios, thereby improving the CSI feedback performance.

BRIEF DESCRIPTION OF THE DRAWINGS

FIG. 1 is a schematic diagram of an architecture of a communication system to which implementations of the present disclosure are applicable.

FIG. 2 is a schematic diagram of a neuron structure.

FIG. 3 is a schematic diagram of a neural network provided in the present disclosure.

FIG. 4 is a schematic diagram of a convolutional neural network (CNN) provided in the present disclosure.

FIG. 5 is a schematic diagram of a long short-term memory (LSTM) unit provided in the present disclosure.

FIG. 6 is a schematic diagram of a channel state information (CSI) feedback provided in the present disclosure.

FIG. 7 is a schematic diagram of another CSI feedback provided in the present disclosure.

FIG. 8 is a schematic flowchart of a method for CSI feedback according to implementations of the present disclosure.

FIG. 9 is a schematic block diagram of a transmitting device according to implementations of the present disclosure.

FIG. 10 is a schematic block diagram of a receiving device according to implementations of the present disclosure.

FIG. 11 is a schematic block diagram of a communication device according to implementations of the present disclosure.

FIG. 12 is a schematic block diagram of an apparatus according to implementations of the present disclosure.

FIG. 13 is a schematic block diagram of a communication system according to implementations of the present disclosure.

DETAILED DESCRIPTION

The following will describe technical solutions of implementations of the present disclosure with reference to the accompanying drawings in implementations of the present disclosure. Apparently, implementations described herein are merely some implementations, rather than all implementations, of the present disclosure. Based on implementations of the present disclosure, all other implementations obtained by those of ordinary skill in the art without creative effort shall fall within the protection scope of the present disclosure.

The technical solutions of implementations of the present disclosure are applicable to various communication systems, for example, a global system of mobile communication (GSM), a code division multiple access (CDMA) system, a wideband code division multiple access (WCDMA) system, a general packet radio service (GPRS), a long-term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) communication system, other communication systems, etc.

Generally speaking, a conventional communication system generally supports a limited number (quantity) of connections and therefore is easy to implement. However, with the development of communication technology, a mobile communication system will not only support conventional communication but also support, for example, device-to-device (D2D) communication, machine-to-machine (M2M) communication, machine-type communication (MTC), vehicle-to-vehicle (V2V) communication, or vehicle-to-everything (V2X) communication, etc. Implementations of the present disclosure are also applicable to these communication systems.

In some implementations, the communication system in implementations of the present disclosure may be applicable to a carrier aggregation (CA) scenario, or may be applicable to a dual connectivity (DC) scenario, or may be applicable to a standalone (SA) scenario or a non-standalone (NSA) scenario.

In some implementations, the communication system in implementations of the present disclosure is applicable to an unlicensed spectrum, and the unlicensed spectrum may be regarded as a shared spectrum. Alternatively, the communication system in implementations of the present disclosure is applicable to a licensed spectrum, and the licensed spectrum may be regarded as a non-shared spectrum.

In some implementations, the communication system in implementations of the present disclosure may be applicable to an FR1 frequency band (corresponding to a frequency band range of 410 MHz to 7.125 GHZ), or may be applicable to an FR2 frequency band (corresponding to a frequency band range of 24.25 GHz to 52.6 GHZ), or may be applicable to a new frequency band, such as a high frequency band corresponding to a frequency band range of 52.6 GHz to 71 GHz or corresponding to a frequency band range of 71 GHz to 114.25 GHZ.

Various implementations of the present disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN), etc.

In implementations of the present disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In implementations of the present disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self-driving, a wireless terminal device in remote medicine, a wireless terminal device in smart grid, a wireless terminal device in transportation safety, a wireless terminal device in smart city, a wireless terminal device in smart home, in-vehicle communication device, wireless communication chip/application-specific integrated circuit (ASIC)/system on chip (SoC), etc.

By way of explanation rather than limitation, in implementations of the present disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In implementations of the present disclosure, the network device may be a device configured to communicate with a mobile device, and the network device may be an access point (AP) in a WLAN, a base transceiver station (BTS) in GSM or CDMA, a Node B (NB) in WCDMA, an evolutional Node B (eNB or eNodeB) in LTE, a relay station or AP, an in-vehicle device, a wearable device, a network device or a BS (gNB) in an NR network, a network device in a future evolved PLMN, a network device in an NTN, etc.

By way of explanation rather than limitation, in implementations of the present disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In implementations of the present disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

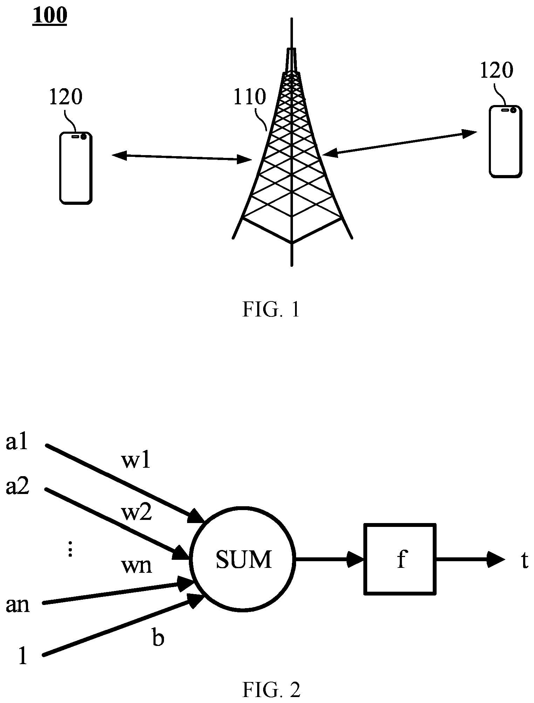

Exemplarily, FIG. 1 illustrates a communication system 100 to which implementations of the present disclosure are applicable. The communication system 100 may include a network device 110. The network device 110 may be a device for communicating with a terminal device 120 (also referred to as "communication terminal" or "terminal"). The network device 110 can provide communication coverage for a specific geographical area and communicate with terminal devices in the coverage area.

FIG. 1 exemplarily illustrates one network device and two terminal devices. Optionally, the communication system 100 may also include multiple network devices, and there can be other quantities of terminal devices in a coverage area of each of the network devices, which is not limited in implementations of the present disclosure.

In some implementations, the communication system 100 may further include other network entities such as a network controller, a mobility management entity, etc., which is not limited in implementations of the present disclosure.

It can be understood that, in implementations of the present disclosure, a device with communication functions in a network/system can be referred to as a "communication device". Taking the communication system 100 illustrated in FIG. 1 as an example, the communication device may include the network device 110 and the terminal device(s) 120 that have communication functions. The network device 110 and the terminal device(s) 120 can be the devices described above and will not be elaborated again herein. The communication device may further include other devices such as a network controller, a mobility management entity, or other network entities in the communication system 100, which is not limited in implementations of the present disclosure.

It can be understood that, the terms "system" and "network" herein are usually used interchangeably throughout the present disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It can be understood that the present disclosure relates to a first communication device and a second communication device. The first communication device may be a terminal device, such as a mobile phone, a machine facility, a customer premise equipment (CPE), an industrial device, a vehicle, etc. The second communication device may be a counterpart communication device of the first communication device, such as a network device, a mobile phone, an industrial device, a vehicle, etc. The present disclosure is illustrated with a specific example that the first communication device is a terminal device and the second communication device is a network device.

Terms used in implementations of the present disclosure are merely intended for explaining implementations of the present disclosure rather than limiting the present disclosure. The terms "first", "second", "third", "fourth", and the like used in the specification, the claims, and the accompanying drawings of the present disclosure are used to distinguish different objects rather than describe a specific order. In addition, the terms "include", "comprise", and "have" as well as variations thereof are intended to cover a non-exclusive inclusion.

It can be understood that, "indication" referred to in implementations of the present disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In the elaboration of implementations of the present disclosure, the term "correspondence" may mean that there is a direct or indirect correspondence between the two, may mean that there is an association between the two, may mean a relationship of indicating and indicated or configuring and configured, etc.

In implementations of the present disclosure, the "pre-defined" or "pre-configured" can be implemented by pre-saving a corresponding code or table in a device (for example, including the terminal device and the network device) or in other manners that can be used for indicating related information, and the present disclosure is not limited in the regard. For example, the "pre-defined" may mean defined in a protocol.

In implementations of the present disclosure, the "protocol" may refer to a communication standard protocol, which may include, for example, an LTE protocol, an NR protocol, and a protocol applicable to a future communication system, and the present disclosure is not limited in the regard.

To facilitate understanding of the technical solutions of implementations of the present disclosure, a conventional codebook-based CSI feedback related to the present disclosure will be described in detail below.

For a 5G NR system, in the current CSI feedback design, a CSI feedback mainly utilizes a codebook-based solution to realize the extraction and feedback of channel features. In other words, after a transmitting end performs channel estimation and obtains a corresponding precoding matrix based on the channel estimation result, the transmitting end selects, according to a certain optimization criterion, a precoding matrix that most closely matches the precoding matrix to be fed back from a preset CSI feedback codebook, and feeds back information such as an index of the matrix to a receiving end through an air interface feedback link, such that the receiving end can realize precoding. Specifically, a codebook can be categorized into three codebook design solutions: Type I, Type II, and enhanced Type II (eType II). Intuitively, in a codebook solution, one of multiple precoding matrices in the codebook is utilized to encode a class of similar precoding matrices to be fed back. A conventional codebook solution is designed based on discrete Fourier transform (DFT) vectors evenly distributed in a spatial domain, and thus the conventional codebook solution has high generalization but lacks a high-performance advantage of specific scenarios.

To facilitate understanding of implementations of the present disclosure, a neural network related to the present disclosure is described.

A neural network is a computational model composed of multiple interconnected neuron nodes, where a connection between nodes represents a weighted value, referred to as a weight, from an input signal to an output signal. At each node, weighted summation (SUM) is performed on different input signals, and an output is generated through a specific activation function ($f$). FIG. 2 is a schematic diagram of a neuron structure, where $a1$, $a2$, ..., and $an$ represent the input signals, *w*1, *w*2, ..., and *wn* represent the weights, *f* represents the activation function, and *t* represents the output.

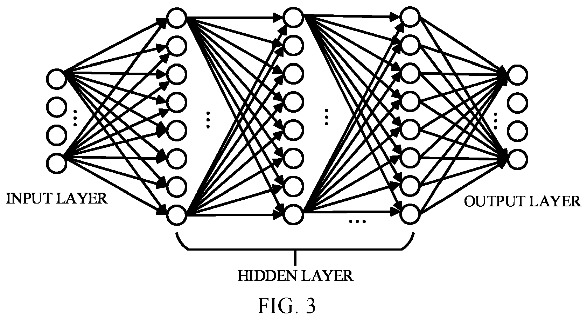

FIG. 3 illustrates a simple neural network. The neural network includes an input layer, a hidden layer, and an output layer. In the neural network, different outputs can be generated through different connection manners, weights, and activation functions of multiple neurons, and then a mapping relationship from input to output is fit. Each node in an upper layer is connected to all nodes in a next layer. The neural network is a fully-connected neural network, and can also be referred to as a "deep neural network (DNN)".

For deep learning, a deep neural network with multiple hidden layers is adopted, which greatly improves the ability of the network to learn features. As such, deep learning can fit complex non-linear mapping from input to output, and thus is widely used in the field of speech and image processing. In addition to the deep neural network, deep learning further includes common basic structures such as a convolutional neural network (CNN), a recurrent neural network (RNN), etc., for different tasks.

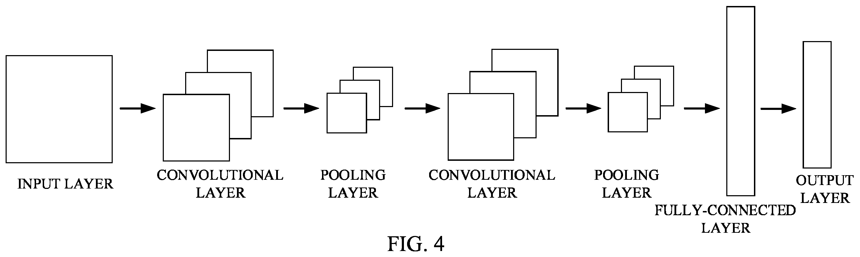

As illustrated in FIG. 4, a basic structure of the CNN includes an input layer, multiple convolutional layers, multiple pooling layers, a fully-connected layer, and an output layer. Each neuron of a convolutional kernel in each convolutional layer is locally connected to its inputs, and a local maximum value or average value feature of a certain layer is extracted through the pooling layers, which effectively reduces parameters of the network and exploits local features, such that the CNN can converge quickly and have excellent performance.

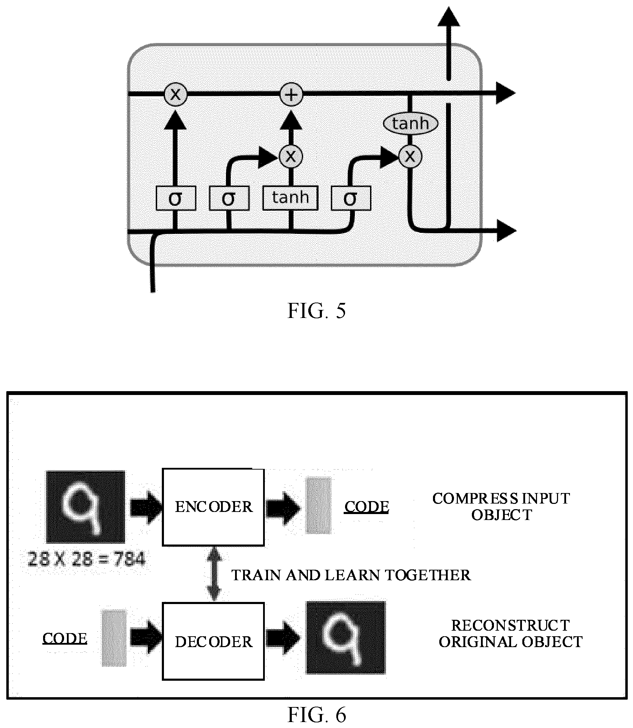

The RNN is a neural network that models sequence data, and has achieved remarkable accomplishments in the field of natural language processing, such as machine translation, speech recognition, or other applications. Specifically, the network memorizes information of a past moment and uses the information in the calculation of a current output, that is, nodes between the hidden layers are not disconnected anymore, instead, the nodes are connected, and inputs into the hidden layer include not only an output of the input layer but also an output of the hidden layer at a previous moment. Commonly used RNNs include structures such as long short-term memory (LSTM), gated recurrent unit (GRU), etc. FIG. 5 illustrates a basic structure of an LSTM unit. The LSTM unit can include a *tanh* activation function. Different from a conventional RNN that only considers the most recent state, a cell state of the LSTM will determine which states should be retained and which states should be forgotten, which solves the disadvantage of the conventional RNN on long-term memory.

To facilitate understanding of implementations of the present disclosure, an artificial intelligence (AI)-based method for CSI feedback related to the present disclosure is described.

Given the great success of AI technologies in aspects such as computer vision, natural language processing, etc., the field of communication has started to try to utilize deep learning to solve technical problems that are difficult to be solved in the conventional communication method, such as deep learning. An architecture of the neural network commonly used in deep learning is non-linear and data-driven, features can be extracted from actual channel matrix data, and channel matrix information compressed and fed back by a terminal end can be recovered at a BS end as much as possible, which ensures to recover the CSI while providing a possibility of reducing overhead of the CSI feedback at the terminal end.

As illustrated in FIG. 6, a deep learning-based CSI feedback considers the CSI as a to-be-compressed picture, utilizes a deep-learning autoencoder to compress and feed back the CSI, and reconstructs the compressed channel picture at the transmitting end. In this way, the CSI can be preserved to a greater extent.

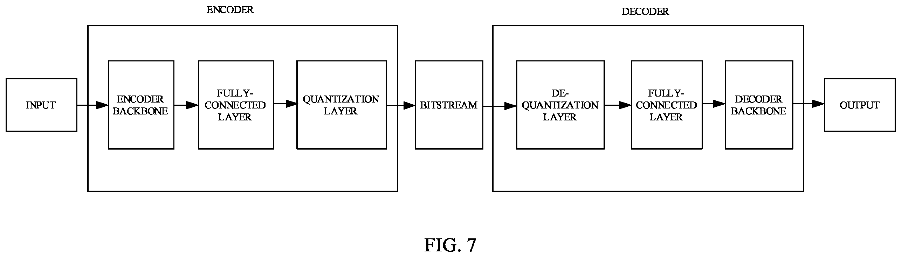

FIG. 7 illustrates a typical system for CSI feedback. The entire feedback system is divided into an encoder and a decoder that are deployed at a transmitting end and a receiving end, respectively. After the transmitting end obtains CSI through channel estimation, the transmitting end compresses and encodes a CSI matrix through a neural network of the encoder, and feeds back a compressed bitstream to the receiving end through an air interface feedback link. The receiving end recovers the CSI through the decoder according to the feedback bitstream, to obtain complete feedback CSI. As illustrated in FIG. 7, superposition of multiple fully-connected layers is adopted in the encoder, and design of a convolutional layer and a residual structure is adopted in the decoder. In the case where the coding framework remains unchanged, network model structures inside the encoder and the decoder can be flexibly designed.

To facilitate understanding of the technical solutions of implementations of the present disclosure, the problems solved in the present disclosure are described below.

First of all, the conventional codebook solution is designed based on DFT vectors evenly distributed in the spatial domain, and thus lacks the high-performance advantage of specific scenarios (e.g., macro-cell scenarios, indoor scenarios, high-speed moving scenarios, etc.). Secondly, in the current AI-based CSI feedback, the CSI is compressed by the encoder of the AI autoencoder at the transmitting end, and the CSI is reconstructed by the decoder of the AI autoencoder at the receiving end. For the current AI-based CSI feedback, the CSI is compressed and fed back by using the non-linear fitting ability of the neural network, which can greatly improve compression efficiency and feedback accuracy. However, due to "black-boxing" (i.e., inexplicability) of the non-linear neural network in an end-to-end AI solution, the current AI-based CSI feedback cannot be expressed in a deterministic and formula-based manner like Type I, Type II, and eType II in the conventional CSI feedback enhancement standardization process, and thus cannot be written into standards. As a result, existing AI solutions are likely to be categorized as implementable solutions during standardization discussions and fail to have a standardized impact.

Based on the technical problems, a solution for CSI feedback is provided in the present disclosure. In the solution, a set of CSI samples is clustered to obtain cluster centers, the cluster centers obtained through clustering are taken as a CSI feedback codebook, and a CSI feedback implemented based on the CSI feedback codebook can have performance advantages of specific data-driven scenarios (e.g., macro-cell scenarios, indoor scenarios, high-speed moving scenarios, etc.,), thereby improving the CSI feedback performance. In addition, the technical solution of the present disclosure is a data-driven solution, which not only takes into account the performance advantages of the data-driven solution, but also makes up for the disadvantage of the data-driven solution that has always been "inexplicable", such that the data-driven solution is more likely to be realized, and thus the data-driven solution for CSI feedback may be standardized.

To facilitate understanding of the technical solutions of implementations of the present disclosure, the technical solutions of the present disclosure will be described in detail below in connection with implementations. The following related art as an optional scheme can be arbitrarily combined with the technical solutions of implementations of the present disclosure, which shall all belong to the protection scope of implementations of the present disclosure. Implementations of the present disclosure include at least some of the following.

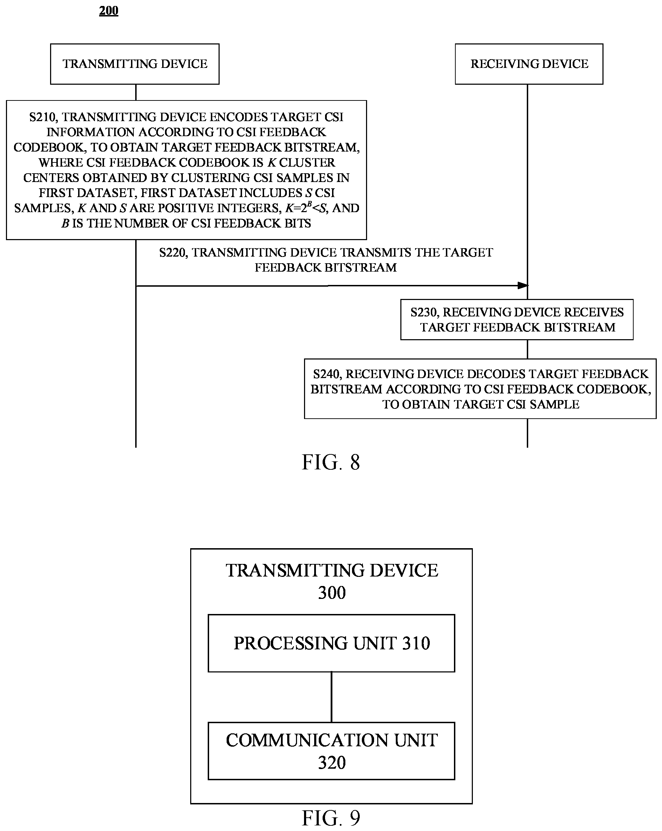

FIG. 8 is a schematic flowchart of a method 200 for CSI feedback according to implementations of the present disclosure. As illustrated in FIG. 8, the method 200 for CSI feedback can include at least some of the following.

S210, a transmitting device encodes target CSI information according to a CSI feedback codebook, to obtain a target feedback bitstream, where the CSI feedback codebook is $K$ cluster centers obtained by clustering CSI samples in a first dataset, the first dataset includes $S$ CSI samples, $K$ and $S$ are positive integers, $K=2^B<S$, and $B$ is the number of CSI feedback bits.

S220, the transmitting device transmits the target feedback bitstream.

S230, a receiving device receives the target feedback bitstream.

S240, the receiving device decodes the target feedback bitstream according to the CSI feedback codebook, to obtain a target CSI sample.

In implementations of the present disclosure, the CSI feedback codebook may be generated by a terminal device, may be generated by a network device, may be generated by a third-party device or a server, or may be generated by a core network element, which is not limited in the present disclosure.

In implementations of the present disclosure, the CSI samples in the first dataset can be clustered to obtain the $K$ cluster centers, the $K$ cluster centers obtained through clustering can be taken as the CSI feedback codebook corresponding to the first dataset, and a CSI feedback implemented based on the CSI feedback codebook can have performance advantages of specific data-driven scenarios (e.g., macro-cell scenarios, indoor scenarios, high-speed moving scenarios, etc.), thereby improving the CSI feedback performance.

In some implementations, the CSI samples in the first dataset may belong to a specific scenario, such as a macro-cell scenario, an indoor scenario, a high-speed moving scenario, etc., or certainly, may belong to other scenarios, which is not limited in implementations of the present disclosure.

In some implementations, the transmitting device is a terminal device, and the receiving device is a network device. Alternatively, the transmitting device is a network device, and the receiving device is a terminal device.

In some implementations, each of the CSI samples in the first dataset is a full CSI matrix in a time domain, or each of the CSI samples in the first dataset is a full CSI matrix in a frequency domain, or each of the CSI samples in the first dataset is a matrix composed of eigenvectors obtained by performing EVD on multiple sub-bands of a full CSI matrix, respectively.

In some implementations, as Example 1, each of the CSI samples in the first dataset is a full CSI matrix in the time domain, or each of the CSI samples in the first dataset is a full CSI matrix in the frequency domain. Optionally, the first dataset $T = \{H_1,...,H_S\}$, where $H_i$ ($i = 1,...,S$) is the full CSI matrix in the time domain or the full CSI matrix in the frequency domain.

In some implementations, as Example 2, each of the CSI samples in the first dataset is a matrix composed of eigenvectors obtained by performing EVD on multiple sub-bands of a full CSI matrix, respectively. Optionally, the first dataset $T = \{W_1,...,W_S\}$, where $W_i = [w_{i,1},...,w_{i,Nsb}] \in C^{Nsb \times Nt}$ ($i = 1,...,S$) is the matrix composed of the eigenvectors obtained by performing EVD on the multiple sub-bands of the full CSI matrix, respectively, $C$ denotes the set of complex numbers, $N_{sb}$ denotes the number of sub-bands, and $N_t$ denotes the number of transmitting antenna ports.

In some implementations, the $K$ cluster centers are obtained by clustering in the following steps. Normalization operation is performed on each of the CSI samples in the first dataset. $K$ CSI samples are randomly selected from the first dataset as initial cluster centers. The following Step 1 and Step 2 are repeated $Q$ times to obtain the $K$ cluster centers, where $Q$ is a positive integer.

Step 1, a cluster to which each of the CSI samples in the first dataset belongs is determined.

Step 2, a cluster center corresponding to each cluster is determined.

In some implementations, the value of $Q$ may be determined based on implementation, or the value of $Q$ is an empirical value.

For example, the value of $Q$ may be 20, 30, 50, 80, 100, etc., which is not limited in implementations of the present disclosure.

In some implementations, the $K$ cluster centers are obtained by clustering in the following steps. Normalization operation is performed on each of the CSI samples in the first dataset. The $K$ CSI samples are randomly selected from the first dataset as the initial cluster centers. The following Step 1 and Step 2 are repeated until quantization errors of all the CSI samples in the first dataset are less than a first preset threshold, to obtain the $K$ cluster centers.

Step 1, a cluster to which each of the CSI samples in the first dataset belongs is determined.

Step 2, a cluster center corresponding to each cluster is determined.

In some implementations, the first preset threshold may be specified in the protocol, the first preset threshold may be configured by the network device, or the first preset threshold may be determined based on implementation.

In some implementations, the $K$ cluster centers are obtained by clustering in the following steps. Normalization operation is performed on each of the CSI samples in the first dataset. The $K$ CSI samples are randomly selected from the first dataset as the initial cluster centers. The following Step 1 and Step 2 are repeated until similarities between all the CSI samples in the first dataset and corresponding cluster centers are greater than a second preset threshold, to obtain the $K$ cluster centers.

Step 1, a cluster to which each of the CSI samples in the first dataset belongs is determined.

Step 2, a cluster center corresponding to each cluster is determined.

In some implementations, the second preset threshold may be specified in the protocol, the second preset threshold may be configured by the network device, or the second preset threshold may be determined based on implementation.

In some implementations, in Example 1, the initial cluster center may be $U_1,...,U_K$.

In some implementations, in Example 1, normalization operation can be performed on a CSI sample $H_i$ ($i = 1,...,S$) in the first dataset according to Formula 1:

$$\|H_1\|_F = \|H_2\|_F = ... = \|H_S\|_F = 1 \qquad \text{Formula 1}$$

where $\|\bullet\|_F$ denotes a Frobenius norm.

In other words, in Example 1, normalization operation can be performed on each of the CSI samples in the first dataset based on Formula 1.

In some implementations, in Example 1, a cluster to which the CSI sample $H_i$ ($i = 1,...,S$) in the first dataset belongs can be determined according to Formula 2:

$$c^i = \text{argmin}_{j=1,...,K} \|H_i - U_j\|_F \qquad \text{Formula 2}$$

where $c^i$ denotes the cluster to which the CSI sample $H_i$ belongs, $U_j$ denotes the $j$-th cluster center, $\text{argmin}_{j=1,...,K} \|H_i - U_j\|_F$ denotes the value of $j$ when $\|H_i - U_j\|_F$ takes a minimum value, and $\|\bullet\|_F$ denotes a Frobenius norm.

In other words, in Example 1, the cluster to which each of the CSI samples in the first dataset belongs can be determined based on Formula 2.

In some implementations, in Example 1, a cluster center $U_j$ corresponding to the cluster $c^i$ can be determined according to Formula 3, where $j = 1,...,K$:

$$U_j = (\sum_{i=1}^{S} f\{c^i = j\}H_i) / (\sum_{i=1}^{S} f\{c^i = j\}) \qquad \text{Formula 3}$$

where $c^i$ denotes the cluster to which the CSI sample $H_i$ belongs, $f\{c^i = j\}=1$ when $c^i = j$ holds, $f\{c^i = j\} = 0$ when $c^i = j$ does not hold, and $\sum$ denotes a summation operation.

In other words, in Example 1, a cluster center corresponding to each of the CSI samples can be determined based on Formula 3.

In some implementations, each of the CSI samples in the first dataset is a full CSI matrix in the time domain, or each of the CSI samples in the first dataset is a full CSI matrix in the frequency domain. In other words, in Example 1, a quantization error of the CSI sample $H_i$ ($i = 1,...,S$) in the first dataset can be determined to be less than the first preset threshold according to Formula 4:

$$\sum_{i=1}^{S} \|H_i - U_c{}^i\|_F < X \qquad \text{Formula 4}$$

where $c^i$ denotes the cluster to which the CSI sample $H_i$ belongs, $U_c{}^i$ denotes a cluster center corresponding to the cluster

$c^i$, X denotes the first preset threshold, and $\|\cdot\|_F$ denotes a Frobenius norm.

In some implementations, in Example 1, the transmitting device encodes the target CSI information based on Formula 5, to generate the target feedback bitstream:

$$b_1 = g(\operatorname{argmin}_{j=1,\ldots,K} \|H - U_j\|_F) \qquad \text{Formula 5}$$

where $b_1$ denotes the target feedback bitstream, $H$ denotes the target CSI information, $U_j$ denotes the *j-th* cluster center among the $K$ cluster centers, $g(\cdot)$ denotes a mapping function between the $K$ cluster centers and a feedback bitstream of $B$ bits, $g(\cdot) \in \{0,1\}^B$, $\operatorname{argmin}_{j=1,\ldots,K} \|H - U_j\|_F$ denotes the value of $j$ when $\|H - U_j\|_F$ takes a minimum value, and $\|\cdot\|_F$ denotes a Frobenius norm.

In other words, in Example 1, after the transmitting device obtains the CSI feedback codebook corresponding to the first dataset, the transmitting device can encode the target CSI information based on Formula 5, to generate a target feedback bitstream $b_1$, and the transmitting device transmits the target feedback bitstream $b_1$ to the receiving device.

In some implementations, in example 1, the receiving device decodes the target feedback bitstream based on Formula 6, to obtain the target CSI information:

$$H = g^{-1}(b_1) \qquad \text{Formula 6}$$

where $b_1 = g(\operatorname{argmin}_{j=1,\ldots,K} \|H - U_j\|_F)$, $b_1$ denotes the target feedback bitstream, $H$ denotes the target CSI information, $U_j$ denotes the *j-th* cluster center among the $K$ cluster centers, $g(\cdot)$ denotes a mapping function between the $K$ cluster centers and a feedback bitstream of $B$ bits, $g(\cdot) \in \{0,1\}^B$, $\operatorname{argmin}_{j=1,\ldots,K} \|H - U_j\|_F$ denotes the value of $j$ when $\|H - U_j\|_F$ takes a minimum value, and $\|\cdot\|_F$ denotes a Frobenius norm.

In other words, in Example 1, after the receiving device obtains the CSI feedback codebook corresponding to the first dataset, the receiving device can decode the target feedback bitstream $b_1$ based on Formula 6, to obtain the target CSI information $H$.

In some implementations, in Example 2, the initial cluster center may be $U_j = [u_{j,1},\ldots,u_{j,Nsb}] \in C^{Nsb \times Nt}$, where $j = 1,\ldots,K$.

In some implementations, in Example 2, normalization operation is performed on a CSI sample $W_i$ ($i = 1,\ldots,S$) in the first dataset according to Formula 7, where $W_i = [w_{i,1},\ldots,w_{i,Nsb}]^T \in C^{Nsb \times Nt}$, $i = 1,\ldots,S$, $N_{sb}$ denotes the number of sub-bands, $N_t$ denotes the number of transmitting antenna ports, and $C$ denotes a set of complex numbers:

$$\|w_{i,1}\|_F = \|w_{i,2}\|_F = \ldots = \|w_{i,Nsb}\|_F \qquad \text{Formula 7}$$

where $\|\cdot\|_F$ denotes a Frobenius norm.

It can be noted that the Frobenius norm in Formula 7 can also be an L2 norm (also referred to as "Euclidean norm").

In other words, in Example 2, normalization operation can be performed on each of the CSI samples in the first dataset based on Formula 7.

In some implementations, in Example 2, a cluster to which the CSI sample $W_i$ ($i = 1,\ldots,S$) in the first dataset belongs can be determined according to Formula 7:

$$c^i = \operatorname{argmax}_{j=1,\ldots,K} \sum_{v=1}^{Nsb} \|w_{i,v}{}^H u_{j,v}\|_F \qquad \text{Formula 8}$$

where $c^i$ denotes the cluster to which the CSI sample $W_i$ belongs, $w_{i,v}{}^H$ denotes a conjugate transpose of a vector corresponding to the CSI sample $W_i$, $u_{j,v}$ denotes a vector corresponding to a sub-band $v$ in a cluster center $U_j$, $U_j = [u_{j,1},\ldots,u_{j,Nsb}], \in C^{Nsb \times Nt}$, $\operatorname{argmax}_{j=1,\ldots,K} \sum_{v=1}^{Nsb} \|w_{i,v}{}^H u_{j,v}\|_F$ denotes the value of $j$ when $\sum_{v=1}^{Nsb} \|w_{i,v}{}^H u_{j,v}\|_F$ takes a maximum value, $\|\cdot\|_F$ denotes a Frobenius norm, and $\Sigma$ denotes a summation operation.

In other words, in Example 2, the cluster to which each of the CSI samples in the first dataset belongs can be determined based on Formula 8.

It can be noted that the Frobenius norm in Formula 8 can also be an L2 norm.

In some implementations, in Example 2, a cluster center $U_j$ ($j = 1,\ldots,K$) corresponding to the cluster $c^i$ can be determined according to Formula 9:

$$U_j = (\sum_{i=1}^{S} f\{c^i = j\} W_i) / (\sum_{i=1}^{S} f\{c^i = j\}) \qquad \text{Formula 9}$$

where $c^i$ denotes the cluster to which the CSI sample $W_i (i = 1,...,S)$ belongs, $f\{c^i = j\}=1$ when $c^i = j$ holds, $f\{c^i = j\} = 0$ when $c^i = j$ does not hold, and $\Sigma$ denotes a summation operation.

In other words, in Example 2, the cluster center corresponding to each cluster can be determined based on Formula 9.

In some implementations, each of the CSI samples in the first dataset is a matrix composed of eigenvectors obtained by performing EVD on multiple sub-bands of a full CSI matrix, respectively. In other words, in Example 2, a similarity between the CSI sample $W_i$ in the first dataset and a corresponding cluster center can be determined to be greater than the second preset threshold according to Formula 10, where $W_i = [w_{i,1},...,w_{i,Nsb}]^T \in C^{Nsb \times Nt}$, $i = 1,...,S$, $N_{sb}$ denotes the number of sub-bands, $N_t$ denotes the number of transmitting antenna ports, and $C$ denotes a set of complex numbers:

$$\sum_{i=1}^{S} \sum_{v=1}^{Nsb} \|w_{i,v}{}^{H} u_{c^i,v}{}^{i}\|_{F} > Y \qquad \text{Formula 10}$$

where v denotes a sub-band, $v = 1,...,N_{sb}$, $w_{i,v}{}^H$ denotes a conjugate transpose of a vector corresponding to the CSI sample $W_i$, $c^i$ denotes the cluster to which the CSI sample $W_i$ belongs, $u_c{}^i_{,v}$ denotes a vector corresponding to the sub-band v in a cluster center $U_c{}^i$ corresponding to the cluster $c'$, $U_c{}^i = [u_c{}^i_{,1},...,u_c{}^i_{,Nsb}] \in C^{Nsb \times Nt}$, $Y$ denotes the second preset threshold, $\Sigma$ denotes a summation operation, and $\|\cdot\|_F$ denotes a Frobenius norm.

In some implementations, in example 2, the transmitting device encodes the target CSI information based on Formula 11, to generate the target feedback bitstream:

$$b_2 = g(\text{argmax}_{j=1,...,K} \sum_{v=1}^{Nsb} \|w_v{}^H u_{j,v}\|_F) \qquad \text{Formula 11}$$

where $b_2$ denotes the target feedback bitstream, $W$ denotes the target CSI information, $W = [w_1,...,w_{Nsb}]^T \in C^{Nsb \times Nt}$, $w_v{}^H$ denotes a conjugate transpose of a vector corresponding to the target CSI information $W$, $u_{j,v}$ denotes a vector corresponding to a sub-band v in a cluster center $U_j$ in the $K$ cluster centers, $U_j = [u_{j,1},...,u_{j,Nsb}], \in C^{Nsb \times Nt}$, $g(\cdot)$ denotes a mapping function between the $K$ cluster centers and a feedback bitstream of $B$ bits, $g(\cdot) \in \{0,1\}^B$, $\text{argmax}_{j=1,...,K} \Sigma^{Nsb}_{v=1}\|w_v{}^H u_{j,v}\|_F$ denotes the value of $j$ when $\Sigma^{Nsb}_{v=1}\|w_v{}^H u_{j,v}\|_F$ takes a maximum value, $\|\cdot\|_F$ denotes a Frobenius norm, and $\Sigma$ denotes a summation operation.

In other words, in Example 2, after the transmitting device obtains the CSI feedback codebook corresponding to the first dataset, the transmitting device can encode the target CSI information $W$ based on Formula 11, to generate a target feedback bitstream $b_2$, and the transmitting device transmits the target feedback bitstream $b_2$ to the receiving device.

In some implementations, in example 2, the receiving device decodes the target feedback bitstream based on Formula 12, to obtain the target CSI information:

$$W = g^{-1}(b_2) \qquad \text{Formula 12}$$

where $b_2 = g(\text{argmax}_{j=1,...,K} \Sigma^{Nsb}_{v=1}\|w_v{}^H u_{j,v}\|_F)$, $W$ denotes the target CSI information, $W = [w_1,...,w_{Nsb}]^T \in C^{Nsb \times Nt}$, $b_2$ denotes the target feedback bitstream, $w_v{}^H$ denotes a conjugate transpose of a vector corresponding to the target CSI information $W$, $u_{j,v}$ denotes a vector corresponding to a sub-band v in a cluster center $U_j$ in the $K$ cluster centers, $U_j = [u_{j,1},...,u_{j,Nsb}], \in C^{Nsb \times Nt}$, $g(\cdot)$ denotes a mapping function between the $K$ cluster centers and a feedback bitstream of $B$ bits, $g(\cdot) \in \{0,1\}^B$, $\text{argmax}_{j=1,...,K}\Sigma^{Nsb}_{v=1}\|w_v{}^H u_{j,v}\|_F$ denotes the value of $j$ when $\Sigma^{Nsb}_{v=1}\|w_v{}^H u_{j,v}\|_F$ takes a maximum value, $\|\cdot\|_F$ denotes a Frobenius norm, and $\Sigma$ denotes a summation operation.

In other words, in Example 2, after the receiving device obtains the CSI feedback codebook corresponding to the first dataset, the receiving device can decode the target feedback bitstream $b_2$ based on Formula 12, to obtain the target CSI information $W$.

It can be noted that various simple modifications can be made to the formulas involved in implementations of the present disclosure, and the formulas subjected to simple modifications also fall within the protection scope of the present disclosure.

Specifically, for example, the Frobenius norm in Formula 6 to Formula 10 can be replaced with the L2 norm.

Therefore, in implementations of the present disclosure, the algorithm process of the solution is simple and clear. The most important aspect is that the dataset is clustered first, and then the cluster centers obtained through clustering are taken as the codebook for bitstream indication encoding. The beneficial effects generated through the process include more feedback performance gains than the end-to-end training solution under low feedback overhead and the standardization potential brought by the explicability of the entire process. Therefore, the performance advantages of the data-driven solution can be maintained, and the disadvantage of the data-driven solution that has always been "inexplicable" can be addressed.

It can be noted that the encoder and the decoder of the AI-based method for CSI feedback are implemented by using the neural network, which is inexplicable. From a perspective of standardization, only input-output interfaces and corresponding interaction processes can be protected and standardized. However, the explicable and formula-based method for codebook construction, such as Type I, Type II, etc., can be directly standardized, but they lack the high-performance advantages of the data-driven solution. In implementations of the present disclosure, a method for machine-learning clustering is considered to be used to construct the CSI feedback codebook. In this way, the high-performance advantage of the data-driven solution can be maintained, and the process of constructing the CSI feedback codebook can be similar to that of Type I codebook or eType II codebook, i.e., explicable and formula-based, and thus has certain standardization potential.

The technical solutions of the present disclosure are described in detail below in combination with Implementation 1 and Implementation 2.

Implementation 1, mainly relates to a process of constructing a CSI feedback codebook for full CSI and an encoding and decoding processes.

Data preparation:

For a data-driven CSI feedback codebook design for specific scenarios (e.g., macro-cell scenarios, indoor scenarios, high-speed moving scenarios, etc.), the first dataset $T$ is constructed in the specific scenarios, where the first dataset $T$ includes $S$ CSI samples, the first dataset $T = \{H_1,...,H_S\}$, and $H_i$ ($i = 1,...,S$) is a full CSI matrix in the time domain or a full CSI matrix in the frequency domain. Normalization operation has been performed on each of the CSI samples in the first dataset $T$, i.e., $\|H_1\|_F = \|H_2\|_F = ... = \|H_S\|_F = 1$, where $\|\bullet\|_F$ denotes a Frobenius norm, and the number of CSI feedback bits is $B$. The CSI feedback codebook can be constructed through the following clustering algorithm.

The codebook construction algorithm process can include the following operations at S11 to S15.

S11, $K$ ($K=2^B<S$) CSI samples are randomly selected from the first dataset $T$ as the initial cluster centers $U_1,...,U_K$.

S12, a cluster to which each CSI sample $H_i$ ($i = 1,...,S$) in the first dataset belongs is calculated, that is,

$$c^i = \mathrm{argmin}_{j=1,...,K} \|H_i - U_j\|_F$$

where $c^i$ denotes the cluster to which the CSI sample $H_i$ belongs, $U_j$ denotes the $j$-th cluster center, $\mathrm{argmin}_{j=1,...,K} \|H_i - U_j\|_F$ denotes the value of $j$ when $\|H_i - U_j\|_F$ takes a minimum value, and $\|\bullet\|_F$ denotes a Frobenius norm.

S13, the cluster center corresponding to each cluster is calculated, that is,

$$U_j = (\textstyle\sum_{i=1}^{S} f\{c^i = j\}H_i) / (\textstyle\sum_{i=1}^{S} f\{c^i = j\});$$

where $c^i$ denotes the cluster to which the CSI sample $H_i$ belongs, $f\{c^i = j\}=1$ when $c^i = j$ holds, $f\{c^i = j\} = 0$ when $c^i = j$ does not hold, and $\Sigma$ denotes a summation operation.

S14, the operations at S12 and S13 are repeated until a certain termination condition is met. The termination condition can be either of the following.

Termination condition 1, a preset number of repetitions $Q$ is reached.

Termination condition 2, the quantization errors of all the CSI samples in the first dataset $T$ is less than the first preset threshold X, that is,

$$\textstyle\sum_{i=1}^{S} \|H_i - U_c^i\|_F < X$$

where $c^i$ denotes the cluster to which the CSI sample $H_i$ belongs, $U_c^i$ denotes the cluster center corresponding to the cluster $c^i$, $X$ denotes the first preset threshold, and $\|\bullet\|_F$ denotes a Frobenius norm.

S15, the cluster centers $U_1,...,U_K$ obtained through the above algorithm are taken as the CSI feedback codebook corresponding to the first dataset $T$, and the CSI feedback codebook is indicated by $B$ bits, that is, a one-to-one mapping between the cluster centers and the bitstream $b$ is established, i.e., $by = g(\bullet) \in \{0,1\}^B$.

The CSI coding process can include the following operations at S16 to S17.

S16, a to-be-encoded CSI sample $H$ (also referred to as "CSI information $H$") is provided, and the transmitting device encodes the CSI sample $H$ according to the constructed CSI feedback codebook based on the following formula, to obtain a to-be-fed back bitstream $b_1$, that is,

$$b_1 = g(\text{argmin}_{j=1,...,K} \|H - U_j\|_F)$$

where $U_j$ denotes the $j$-th cluster center among the $K$ cluster centers, $g(\cdot)$ denotes a mapping function between the $K$ cluster centers and a feedback bitstream of $B$ bits, $g(\cdot) \in \{0,1\}^B$, argmin$_{j=1,...,K} \|H - U_j\|_F$ denotes the value of $j$ when $\|H - U_j\|_F$ takes a minimum value, and $\|\cdot\|_F$ denotes a Frobenius norm.

S17, after the receiving end receives the bitstream $b_1$, the receiving end decodes the bitstream $b_1$ according to the mapping function $g(\cdot)$, i.e., $H = g^{-1}(b_1)$, and henceforth the CSI feedback based on the full CSI is completed.

Implementation 2, mainly relates to a process of constructing a CSI feedback codebook for eigenvectors obtained by performing EVD on multiple sub-bands of a full CSI matrix, respectively, and an encoding and decoding processes.

Data preparation:

For the data-driven CSI feedback codebook design for specific scenarios (e.g., macro-cell scenarios, indoor scenarios, high-speed moving scenarios, etc.), the first dataset $T$ is constructed in the specific scenarios, where the first dataset $T$ includes $S$ CSI samples, the first dataset $T = \{W_1,..., W_S\}$, and $W_i = [w_{i,1},...,w_{i,Nsb}] \in C^{Nsb \times Nt}$ ($i = 1,...,S$) is a matrix composed of the eigenvectors obtained by performing EVD on the multiple sub-bands of the full CSI matrix, respectively, $C$ denotes a set of complex numbers, $N_{sb}$ denotes the number of sub-bands, $N_t$ denotes the number of transmitting antenna ports, and the number of CSI feedback bits is $B$. The CSI feedback codebook can be constructed through the following clustering algorithm.

The codebook construction algorithm process can include the following operations at S21 to S25.

S21, $K(K=2^B<S)$ CSI samples are randomly selected from the first dataset $T$ as the initial cluster centers $U_j = [u_{j,1},...,u_{j,Nsb}] \in C^{Nsb \times Nt}$, where $j = 1,...,K$.

S22, a cluster to which each CSI sample $W_i$ ($i = 1,...,S$) in the first dataset belongs is calculated, that is,

$$c^i = \text{argmax}_{j=1,...,K} \sum_{v=1}^{Nsb} \|w_{i,v}{}^H u_{j,v}\|_F$$

where $c^i$ denotes the cluster to which the CSI sample $W_i$ belongs, $w_{i,v}{}^H$ denotes a conjugate transpose of a vector corresponding to the CSI sample $W_i$, $u_{j,v}$ denotes a vector corresponding to a sub-band v in a cluster center $U_j$, $U_j = [u_{j,1},...,u_{j,Nsb}], \in C^{Nsb \times Nt}$, argmax$_{j=1,...,K}\sum_{v=1}^{Nsb}\|w_{i,v}{}^H u_{j,v}\|_F$ denotes the value of $j$ when $\sum_{v=1}^{Nsb}\|w_{i,v}{}^H u_{j,v}\|_F$ takes a maximum value, $\|\cdot\|_F$ denotes a Frobenius norm, and $\Sigma$ denotes a summation operation.

S23, the cluster center corresponding to each cluster is calculated, that is,

$$U_j = (\sum_{i=1}^{S} f\{c^i = j\} W_i) / (\sum_{i=1}^{S} f\{c^i = j\});$$

where $c^i$ denotes the cluster to which the CSI sample $W_i$ ($i = 1,...,S$) belongs, $f\{c^i = j\}=1$ when $c^i = j$ holds, $f\{c^i = j\} = 0$ when $c^i = j$ does not hold, and $\Sigma$ denotes a summation operation.

S24, the operations at S22 and S23 are repeated until a certain termination condition is met. The termination condition can be either of the following.

Termination condition 1, a preset number of repetitions $Q$ is reached.

Termination condition 2, similarities between all the CSI samples in the first dataset $T$ and corresponding cluster centers are greater than the second preset threshold, that is,

$$\sum_{i=1}^{S} \sum_{v=1}^{Nsb} \|w_{i,v}{}^H u_{c',v}{}^i\|_F > Y$$

where $v$ denotes a sub-band, $v = 1,...,N_{sb}$, $w_{i,v}{}^H$ denotes a conjugate transpose of a vector corresponding to the CSI sample $W_i$, $c'$ denotes the cluster to which the CSI sample $W_i$ belongs, $u_{c',v}{}^i$ denotes a vector corresponding to the sub-band v in a cluster center $U_c{}^i$ corresponding to the cluster $c'$, $U_c{}^i = [u_{c',1}{}^i,...,u_{c',Nsb}{}^i] \in C^{Nsb \times Nt}$, $Y$ denotes the second preset threshold, $\Sigma$ denotes a summation operation, and $\|\cdot\|_F$ denotes a Frobenius norm.

S25, the cluster centers $U_1,...,U_K$ obtained through the above algorithm are taken as the CSI feedback codebook corresponding to the first dataset $T$, and the CSI feedback codebook is indicated by $B$ bits, that is, a one-to-one mapping between the cluster centers and the bitstream $b$ is established, i.e., $b_j = g(\cdot) \in \{0,1\}^B$.

The CSI coding process can include the following operations at S26 to S27.

S26, a to-be-encoded CSI sample $W$ (also referred to as "CSI information $W$") is provided, and the transmitting device encodes the CSI sample $W$ according to the constructed CSI feedback codebook based on the following formula, to obtain a to-be-fed back bitstream $b_2$, that is,

$$b_2 = g(\text{argmax}_{j=1,...,K} \sum^{Nsb}_{v=1} \|w_v{}^H u_{j,v}\|_F);$$

where $W = [w_1,...,w_{Nsb}]^T \in C^{Nsb \times Nt}$, $w_v{}^H$ denotes a conjugate transpose of a vector corresponding to the target CSI information $W$, $u_{j,v}$ denotes a vector corresponding to a sub-band $v$ in a cluster center $U_j$ in the $K$ cluster centers, $U_j = [u_{j,1},..., u_{j,Nsb}], \in C^{Nsb \times Nt}$, $g(\bullet)$ denotes a mapping function between the $K$ cluster centers and a feedback bitstream of $B$ bits, $g(\bullet) \in \{0,1\}^B$, $\text{argmax}_{j=1,...,K} \sum^{Nsb}_{v=1} \|w_v{}^H u_{j,v}\|_F$ denotes the value of $j$ when $\sum^{Nsb}_{v=1} \|w_v{}^H u_{j,v}\|_F$ takes a maximum value, $\|\bullet\|_F$ denotes a Frobenius norm, and $\Sigma$ denotes a summation operation.

S17, after the receiving end receives the bitstream $b_2$, the receiving end decodes the bitstream $b_2$ according to the mapping function $g(\bullet)$, i.e., $W = g^{-1}(b_2)$, and henceforth the CSI feedback based on the full CSI is completed.

The method implementations of the present disclosure are described in detail above with reference to FIG. 8, and the apparatus implementations of the present disclosure will be described in detail below with reference to FIG. 9 to FIG. 11. It should be understood that the apparatus implementations and the method implementations correspond to each other, and for similar content, reference can be made to the method implementations.

FIG. 9 illustrates a schematic block diagram of a transmitting device 300 according to implementations of the present disclosure. As illustrated in FIG. 9, the transmitting device 300 includes a processing unit 310 and a communication unit 320. The processing unit 310 is configured to encode target CSI information according to a CSI feedback codebook, to obtain a target feedback bitstream. The communication unit 320 is configured to transmit the target feedback bitstream. The CSI feedback codebook is $K$ cluster centers obtained by clustering CSI samples in a first dataset, the first dataset includes $S$ CSI samples, $K$ and $S$ are positive integers, $K = 2^B < S$, and $B$ is the number of CSI feedback bits.

In some implementations, each of the CSI samples in the first dataset is a full CSI matrix in a time domain, or each of the CSI samples in the first dataset is a full CSI matrix in a frequency domain, or each of the CSI samples in the first dataset is a matrix composed of eigenvectors obtained by performing EVD on multiple sub-bands of a full CSI matrix, respectively.

In some implementations, the $K$ cluster centers are obtained by clustering in the following steps. Normalization operation is performed on each of the CSI samples in the first dataset. $K$ CSI samples are randomly selected from the first dataset as initial cluster centers. The following Step 1 and Step 2 are repeated $Q$ times to obtain the $K$ cluster centers, where $Q$ is a positive integer. Step 1, a cluster to which each of the CSI samples in the first dataset belongs is determined. Step 2, a cluster center corresponding to each cluster is determined.

In some implementations, the $K$ cluster centers are obtained by clustering in the following steps. Normalization operation is performed on each of the CSI samples in the first dataset. $K$ CSI samples are randomly selected from the first dataset as the initial cluster centers. The following Step 1 and Step 2 are repeated until quantization errors of all the CSI samples in the first dataset are less than a first preset threshold, to obtain the $K$ cluster centers. Step 1, a cluster to which each of the CSI samples in the first dataset belongs is determined. Step 2, a cluster center corresponding to each cluster is determined.

In some implementations, each of the CSI samples in the first dataset is a full CSI matrix in the time domain, or each of the CSI samples in the first dataset is a full CSI matrix in the frequency domain. A quantization error of a CSI sample $H_i$ in the first dataset being less than the first preset threshold is determined based on the following formula, where $i = 1,..., S$:

$$\sum^S_{i=1} \|H_i - U_c{}^i\|_F < X;$$

where $c^i$ denotes a cluster to which the CSI sample $H_i$ belongs, $U_c{}^i$ denotes a cluster center corresponding to the cluster $c^i$, $X$ denotes the first preset threshold, and $\|\bullet\|_F$ denotes a Frobenius norm.

In some implementations, the $K$ cluster centers are obtained by clustering in the following steps. Normalization operation is performed on each of the CSI samples in the first dataset. $K$ CSI samples are randomly selected from the first dataset as the initial cluster centers. The following Step 1 and Step 2 are repeated until similarities between all the CSI samples in the first dataset and corresponding cluster centers are greater than a second preset threshold, to obtain the $K$ cluster centers. Step 1, a cluster to which each of the CSI samples in the first dataset belongs is determined. Step 2, a cluster center corresponding to each cluster is determined.

In some implementations, each of the CSI samples in the first dataset is a matrix composed of eigenvectors obtained by performing EVD on multiple sub-bands of a full CSI matrix, respectively. A similarity between a CSI sample $W_i$ in the first dataset and a corresponding cluster center being greater than the second preset threshold is determined based on the following formula, where $W_i = [w_{i,1},...,w_{i,Nsb}]^T \in C^{Nsb \times Nt}$, $i = 1,...,S$, $N_{sb}$ denotes the number of sub-bands, $N_t$ denotes the number of transmitting antenna ports, and C denotes a set of complex numbers:

$$\sum^S_{i=1} \sum^{Nsb}_{v=1} \|\mathbf{w}_{i,v}{}^H \mathbf{u}_{\mathbf{c},v}{}^i\|_F > Y;$$

where v denotes a sub-band, $v = 1,..., N_{sb}$, $w_{i,v}{}^H$ denotes a conjugate transpose of a vector corresponding to the CSI sample $W_i$, $c^i$ denotes a cluster to which the CSI sample $W_i$ belongs, $u_{c,v}{}^i$ denotes a vector corresponding to the sub-band $v$ in a cluster center $U_c{}^i$ corresponding to the cluster $c^i$, $U_c{}^i = [u_{c,1}{}^i,...,u_{c,Nsb}{}^i] \in C^{Nsb \times Nt}$, $\Sigma$ denotes the second preset threshold, $\Sigma$ denotes a summation operation, and $\|\cdot\|_F$ denotes a Frobenius norm.

In some implementations, each of the CSI samples in the first dataset is a full CSI matrix in the time domain, or each of the CSI samples in the first dataset is a full CSI matrix in the frequency domain. Normalization operation is performed on each of the CSI samples in the first dataset as follows. Normalization operation is performed on the CSI sample $H_i$ in the first dataset according to the following formula, where $i = 1,...,S$:

$$\|H_1\|_F = \|H_2\|_F = ... = \|H_S\|_F = 1;$$

where $\|\cdot\|_F$ denotes a Frobenius norm.

In some implementations, the cluster to which each of the CSI samples in the first dataset belongs is determined as follows. The cluster to which the CSI sample $H_i$ in the first dataset belongs is determined according to the following formula:

$$c^i = \mathrm{argmin}_{j=1,...,K} \|H_i - U_j\|_F;$$

where $c^i$ denotes the cluster to which the CSI sample $H_i$ belongs, $U_j$ denotes the $j$-th cluster center, $\mathrm{argmin}_{j=1,...,K} \|H_i - U_j\|_F$ denotes the value of $j$ when $\|H_i - U_j\|_F$ takes a minimum value, and $\|\cdot\|_F$ denotes a Frobenius norm.

In some implementations, the cluster center corresponding to each cluster is determined as follows. A cluster center $U_j$ corresponding to a cluster $c^i$ is determined according to the following formula, where $j = 1,...,K$:

$$U_j = (\sum^S_{i=1} f\{c^i = j\}H_i) / (\sum^S_{i=1} f\{c^i = j\});$$

where $c^i$ denotes the cluster to which the CSI sample $H_i$ belongs, $f\{c^i =j\}=1$ when $c^i = j$ holds, $f\{c^i =j\} = 0$ when $c^i = j$ does not hold, and $\Sigma$ denotes a summation operation.

In some implementations, the processing unit 310 is specifically configured to encode the target CSI information based on the following formula, to generate the target feedback bitstream:

$$b_1 = g(\mathrm{argmin}_{j=1,...,K} \|H - U_j\|_F);$$

where $b_1$ denotes the target feedback bitstream, $H$ denotes the target CSI information, $U_j$ denotes the $j$-th cluster center among the $K$ cluster centers, $g(\cdot)$ denotes a mapping function between the K cluster centers and a feedback bitstream of $B$ bits, $g(\cdot) \in \{0,1\}^B$, $\mathrm{argmin}_{j=1,...,K} \|H - U_j\|_F$ denotes the value of $j$ when $\|H - U_j\|_F$ takes a minimum value, and $\|\cdot\|_F$ denotes a Frobenius norm.

In some implementations, each of the CSI samples in the first dataset is a matrix composed of eigenvectors obtained by performing EVD on multiple sub-bands of a full CSI matrix, respectively. Normalization operation is performed on each of the CSI samples in the first dataset as follows. Normalization operation is performed on the CSI sample $W_i$ in the first dataset according to the following formula, where $W_i = [w_{i,1},...,w_{i,Nsb}]^T \in C^{Nsb \times Nt}$, $i = 1,...,S$, $N_{sb}$ denotes the number of sub-bands, $N_t$ denotes the number of transmitting antenna ports, and $C$ denotes a set of complex numbers:

$$\|w_{i,1}\|_F = \|w_{i,2}\|_F = ... = \|w_{i,Nsb}\|_F;$$

where $\|\cdot\|_F$ denotes a Frobenius norm.

In some implementations, the cluster to which each of the CSI samples in the first dataset belongs is determined as follows. The cluster to which the CSI sample $W_i$ in the first dataset belongs is determined according to the following formula:

$$c^i = \mathrm{argmax}_{j=1,...,K} \sum^{Nsb}_{v=1} \|w_{i,v}{}^H u_{j,v}\|_F;$$

where $c^i$ denotes the cluster to which the CSI sample $W_i$ belongs, $w_{i,v}{}^H$ denotes a conjugate transpose of a vector corresponding to the CSI sample $W_i$, $u_{j,v}$ denotes a vector corresponding to a sub-band $v$ in a cluster center $U_j$, $U_j = [u_{j,1},...,u_{j,Nsb}] \in C^{Nsb \times Nt}$, $\text{argmax}_{j=1,...,K} \sum^{Nsb}_{v=1} \|w_{i,v}{}^H u_{j,v}\|_F$ denotes the value of $j$ when $\sum^{Nsb}_{v=1} \|w_{i,v}{}^H u_{j,v}\|_F$ takes a maximum value, $\|\cdot\|_F$ denotes a Frobenius norm, and $\Sigma$ denotes a summation operation.

In some implementations, the cluster center corresponding to each cluster is determined as follows. A cluster center $U_j$ corresponding to a cluster $c^i$ is determined according to the following formula, where $i = 1,...,S$, and $j = 1,...,K$:

$$U_j = \left(\sum^{S}_{i=1} f\{c^i = j\} W_i\right) / \left(\sum^{S}_{i=1} f\{c^i = j\}\right);$$

where $c^i$ denotes the cluster to which the CSI sample $W_i$ belongs, $f\{c^i = j\}=1$ when $c^i = j$ holds, $f\{c^i = j\} = 0$ when $c^i = j$ does not hold, and $\Sigma$ denotes a summation operation.

In some implementations, the processing unit 310 is specifically configured to encode the target CSI information based on the following formula, to generate the target feedback bitstream:

$$b_2 = g\left(\text{argmax}_{j=1,...,K} \sum^{Nsb}_{v=1} \|w_v{}^H u_{j,v}\|_F\right);$$

where $b_2$ denotes the target feedback bitstream, $W$ denotes the target CSI information, $W = [w_1,...,w_{Nsb}]^T \in C^{Nsb \times Nt}$, $w_v{}^H$ denotes a conjugate transpose of a vector corresponding to the target CSI information $W$, $u_{j,v}$ denotes a vector corresponding to a sub-band v in a cluster center $U_j$ in the K cluster centers, $U_j = [u_{j,1},...,u_{j,Nsb}], \in C^{Nsb \times Nt}$, $g(\bullet)$ denotes a mapping function between the $K$ cluster centers and a feedback bitstream of $B$ bits, $g(\bullet) \in \{0,1\}^B$, $\text{argmax}_{j=1,...,K} \Sigma^{Nsb}_{v=1}\|w_v{}^H u_{j,v}\|_F$ denotes the value of $j$ when $\Sigma^{Nsb}_{v=1}\|w_v{}^H u_{j,v}\|_F$ takes a maximum value, $\|\cdot\|_F$ denotes a Frobenius norm, and $\Sigma$ denotes a summation operation.

In some implementations, the communicating unit may be a communication interface or a transceiver, or an input/output interface of a communication chip or an SOC. The processing unit may be one or more processors.

It should be understood that, the transmitting device 300 according to implementations of the present disclosure may correspond to the transmitting device in the method implementations of the present disclosure, and the foregoing and other operations and/or functions of various units in the transmitting device 300 are respectively intended for implementing corresponding operations of the transmitting device in the method 200 illustrated in FIG. 8, which is not repeated herein for the sake of brevity.

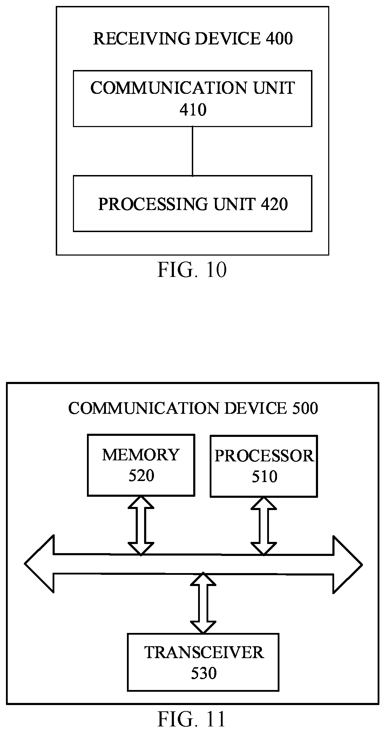

FIG. 10 illustrates a schematic block diagram of a receiving device 400 according to implementations of the present disclosure. As illustrated in FIG. 10, the receiving device 400 includes a communication unit 410 and a processing unit 420. The communication unit 410 is configured to receive a target feedback bitstream. The processing unit 420 is configured to decode the target feedback bitstream according to a CSI feedback codebook, to obtain a target CSI sample. The CSI feedback codebook is $K$ cluster centers obtained by clustering CSI samples in a first dataset, the first dataset includes $S$ CSI samples, $K$ and $S$ are positive integers, $K=2^B<S$, and $B$ is the number of CSI feedback bits.

In some implementations, each of the CSI samples in the first dataset is a full CSI matrix in a time domain, or each of the CSI samples in the first dataset is a full CSI matrix in a frequency domain, or each of the CSI samples in the first dataset is a matrix composed of eigenvectors obtained by performing EVD on multiple sub-bands of a full CSI matrix, respectively.

In some implementations, the $K$ cluster centers are obtained by clustering in the following steps. Normalization operation is performed on each of the CSI samples in the first dataset. $K$ CSI samples are randomly selected from the first dataset as initial cluster centers. The following Step 1 and Step 2 are repeated $Q$ times to obtain the $K$ cluster centers, where $Q$ is a positive integer. Step 1, a cluster to which each of the CSI samples in the first dataset belongs is determined. Step 2, a cluster center corresponding to each cluster is determined.

In some implementations, the $K$ cluster centers are obtained by clustering in the following steps. Normalization operation is performed on each of the CSI samples in the first dataset. $K$ CSI samples are randomly selected from the first dataset as the initial cluster centers. The following Step 1 and Step 2 are repeated until quantization errors of all the CSI samples in the first dataset are less than a first preset threshold, to obtain the $K$ cluster centers. Step 1, a cluster to which each of the CSI samples in the first dataset belongs is determined. Step 2, a cluster center corresponding to each cluster is determined.

In some implementations, each of the CSI samples in the first dataset is a full CSI matrix in the time domain, or each of the CSI samples in the first dataset is a full CSI matrix in the frequency domain. A quantization error of a CSI sample $H_i$ in the first dataset being less than the first preset threshold is determined based on the following formula, where $i = 1,..., S$:

$$\sum^{S}_{i=1} \|H_i - U_c{}^i\|_F < X;$$

where $c^i$ denotes a cluster to which the CSI sample $H_i$ belongs, $U_c{}^i$ denotes a cluster center corresponding to the cluster $c^i$,

$X$ denotes the first preset threshold, and $\|\bullet\|_F$ denotes a Frobenius norm.

In some implementations, the $K$ cluster centers are obtained by clustering in the following steps. Normalization operation is performed on each of the CSI samples in the first dataset. $K$ CSI samples are randomly selected from the first dataset as the initial cluster centers. The following Step 1 and Step 2 are repeated until similarities between all the CSI samples in the first dataset and corresponding cluster centers are greater than a second preset threshold, to obtain the $K$ cluster centers. Step 1, a cluster to which each of the CSI samples in the first dataset belongs is determined. Step 2, a cluster center corresponding to each cluster is determined.

In some implementations, each of the CSI samples in the first dataset is a matrix composed of eigenvectors obtained by performing EVD on multiple sub-bands of a full CSI matrix, respectively. A similarity between a CSI sample $W_i$ in the first dataset and a corresponding cluster center being greater than the second preset threshold is determined based on the following formula, where $W_i = [w_{i,1},...,w_{i,Nsb}]^T \in C^{Nsb \times Nt}$, $i = 1,...,S$, $N_{sb}$ denotes the number of sub-bands, $N_t$ denotes the number of transmitting antenna ports, and $C$ denotes a set of complex numbers:

$$\sum\nolimits^{S}_{i=1} \sum\nolimits^{Nsb}_{v=1} \|\mathbf{w}_{i,v}{}^H \mathbf{u}_{c'}{}^{i}{}_{,v}\|_F > Y;$$

where $v$ denotes a sub-band, $v = 1,...,N_{sb}$, $w_{i,v}{}^H$ denotes a conjugate transpose of a vector corresponding to the CSI sample $W_i$, $c'$ denotes a cluster to which the CSI sample $W_i$ belongs, $u_{c',v}^i$ denotes a vector corresponding to the sub-band $v$ in a cluster center $U_{c'}^i$ corresponding to the cluster $c'$, $U_{c'}^i = [u_{c',1}^i,...,u_{c',Nsb}^i] \in C^{Nsb \times Nt}$, $Y$ denotes the second preset threshold, $\Sigma$ denotes a summation operation, and $\|\bullet\|_F$ denotes a Frobenius norm.

In some implementations, each of the CSI samples in the first dataset is a full CSI matrix in the time domain, or each of the CSI samples in the first dataset is a full CSI matrix in the frequency domain. Normalization operation is performed on each of the CSI samples in the first dataset as follows. Normalization operation is performed on the CSI sample $H_i$ in the first dataset according to the following formula, where $i = 1,...,S$:

$$\|H_1\|_F = \|H_2\|_F = ... = \|H_S\|_F = 1;$$

where $\|\bullet\|_F$ denotes a Frobenius norm.

In some implementations, the cluster to which each of the CSI samples in the first dataset belongs is determined as follows. The cluster to which the CSI sample $H_i$ in the first dataset belongs is determined according to the following formula:

$$c^i = \operatorname{argmin}_{j=1,...,K} \|H_i - U_j\|_F;$$

where $c^i$ denotes the cluster to which the CSI sample $H_i$ belongs, $U_j$ denotes the $j$-th cluster center, $\operatorname{argmin}_{j=1,...,K} \|H_i - U_j\|_F$ denotes the value of $j$ when $\|H_i - U_j\|_F$ takes a minimum value, and $\|\bullet\|_F$ denotes a Frobenius norm.

In some implementations, the cluster center corresponding to each cluster is determined as follows. A cluster center $U_j$ corresponding to a cluster $c^i$ is determined according to the following formula, where $j = 1,...,K$:

$$U_j = (\sum\nolimits^{S}_{i=1} f\{c^i = j\} H_i) / (\sum\nolimits^{S}_{i=1} f\{c^i = j\});$$

where $c^i$ denotes the cluster to which the CSI sample $H_i$ belongs, $f\{c^i = j\} = 1$ when $c^i = j$ holds, $f\{c^i = j\} = 0$ when $c^i = j$ does not hold, and $\Sigma$ denotes a summation operation.

In some implementations, the processing unit 420 is specifically configured to decode the target feedback bitstream based on the following formula, to obtain the target CSI sample:

$$H = g^{-1}(b_1);$$

where $b_1 = g(\operatorname{argmin}_{j=1,...,K} \|H - U_j\|_F)$, $b_1$ denotes the target feedback bitstream, $H$ denotes the target CSI information, $U_j$ denotes the $j$-th cluster center among the $K$ cluster centers, $g(\bullet)$ denotes a mapping function between the $K$ cluster centers and a feedback bitstream of $B$ bits, $g(\bullet) \in \{0,1\}^B$, $\operatorname{argmin}_{j=1,...,K} \|H - U_j\|_F$ denotes the value of $j$ when $\|H - U_j\|_F$ takes a minimum value, and $\|\bullet\|_F$ denotes a Frobenius norm.

In some implementations, each of the CSI samples in the first dataset is a matrix composed of eigenvectors obtained by performing EVD on multiple sub-bands of a full CSI matrix, respectively. Normalization operation is performed on each of the CSI samples in the first dataset as follows. Normalization operation is performed on the CSI sample $W_i$ in the first dataset according to the following formula, where $W_i = [w_{i,1},...,w_{i,Nsb}]^T \in C^{Nsb \times Nt}$, $i = 1,...,S$, $N_{sb}$ denotes the number of sub-bands, $N_t$ denotes the number of transmitting antenna ports, and $C$ denotes a set of complex numbers:

$$\|w_{i,1}\|_F = \|w_{i,2}\|_F = \ldots = \|w_{i,Nsb}\|_F;$$

where $\|\bullet\|_F$ denotes a Frobenius norm.

In some implementations, the cluster to which each of the CSI samples in the first dataset belongs is determined as follows. The cluster to which the CSI sample $W_i$ in the first dataset belongs is determined according to the following formula:

$$c^i = \operatorname{argmax}_{j=1,\ldots,K} \sum\nolimits^{Nsb}_{v=1} \|w_{i,v}{}^H u_{j,v}\|_F;$$

where $c^i$ denotes the cluster to which the CSI sample $W_i$ belongs, $w_{i,v}{}^H$ denotes a conjugate transpose of a vector corresponding to the CSI sample $W_i$, $u_{j,v}$ denotes a vector corresponding to a sub-band $v$ in a cluster center $U_j$, $U_j = [u_{j,1},\ldots, u_{j,Nsb}]$, $\in C^{Nsb \times Nt}$, $\operatorname{argmax}_{j=1,\ldots,K} \sum^{Nsb}_{v=1}\|w_{i,v}{}^H u_{j,v}\|_F$ denotes the value of $j$ when $\sum^{Nsb}_{v=1}\|w_{i,v}{}^H u_{j,v}\|_F$ takes a maximum value, $\|\bullet\|_F$ denotes a Frobenius norm, and $\sum$ denotes a summation operation.

In some implementations, the cluster center corresponding to each cluster is determined as follows. A cluster center $U_j$ corresponding to a cluster $c^i$ is determined according to the following formula, where $i = 1,\ldots,S$, and $j = 1,\ldots,K$:

$$U_j = (\sum\nolimits^{S}_{i=1} f\{c^i = j\} W_i) / (\sum\nolimits^{S}_{i=1} f\{c^i = j\});$$

where $c^i$ denotes the cluster to which the CSI sample $W_i$ belongs, $f\{c^i = j\} = 1$ when $c^i = j$ holds, $f\{c^i = j\} = 0$ when $c^i = j$ does not hold, and $\sum$ denotes a summation operation.

In some implementations, the processing unit 420 is specifically configured to decode the target feedback bitstream based on the following formula, to obtain the target CSI sample:

$$W = g^{-1}(b_2);$$

where $b_2 = g(\operatorname{argmax}_{j=1,\ldots,K} \sum^{Nsb}_{v=1}\|w_v{}^H u_{j,v}\|_F)$, $W$ denotes the target CSI information, $W = [w_1,\ldots,w_{Nsb}]^T \in C^{Nsb \times Nt}$, $b_2$ denotes the target feedback bitstream, $w_v{}^H$ denotes a conjugate transpose of a vector corresponding to the target CSI information $W$, $u_{j,v}$ denotes a vector corresponding to a sub-band $v$ in a cluster center $U_j$ in the $K$ cluster centers, $U_j = [u_{j,1},\ldots, u_{j,Nsb}]$, $\in C^{Nsb \times Nt}$, $g(\bullet)$ denotes a mapping function between the $K$ cluster centers and a feedback bitstream of $B$ bits, $g(\bullet) \in \{0,1\}^B$, $\operatorname{argmax}_{j=1,\ldots,K} \sum^{Nsb}_{v=1}\|w_v{}^H u_{j,v}\|_F$ denotes the value of $j$ when $\sum^{Nsb}_{v=1}\|w_v{}^H u_{j,v}\|_F$ takes a maximum value, $\|\bullet\|_F$ denotes a Frobenius norm, and $\sum$ denotes a summation operation.

In some implementations, the communicating unit may be a communication interface or a transceiver, or an input/output interface of a communication chip or an SOC. The processing unit may be one or more processors.

It should be understood that, the receiving device 400 according to implementations of the present disclosure may correspond to the receiving device in the method implementations of the present disclosure, and the foregoing and other operations and/or functions of various units in the receiving device 400 are respectively intended for implementing corresponding operations of the receiving device in the method 200 illustrated in FIG. 8, which is not repeated herein for the sake of brevity.

FIG. 11 is a schematic structural diagram of a communication device 500 provided in implementations of the present disclosure. The communication device 500 illustrated in FIG. 11 includes a processor 510. The processor 510 can invoke and execute a computer program stored in a memory, to implement the method in implementations of the present disclosure.

In some implementations, as illustrated in FIG. 11, the communication device 500 can further include a memory 520. The processor 510 can invoke and execute a computer program stored in the memory 520 to implement the method in implementations of the present disclosure.

The memory 520 may be a separate device independent of the processor 510, or may be integrated into the processor 510.

In some implementations, as illustrated in FIG. 11, the communication device 500 can further include a transceiver 530. The processor 510 can control the transceiver 530 to communicate with other devices, and specifically, to send information or data to other devices or receive information or data sent by other devices.

The transceiver 530 can include a transmitter and a receiver. The transceiver 530 can further include an antenna, where one or more antennas can be provided.

In some implementations, the processor 510 can implement the function of a processing unit in a transmitting device, or the processor 510 can implement the function of a processing unit in a receiving device, which is not repeated herein for the sake of brevity.

In some implementations, the transceiver 530 can implement the function of a communication unit in the transmitting device, which is not repeated herein for the sake of brevity.

In some implementations, the transceiver 530 can implement the function of a communication unit in the receiving device, which is not repeated herein for the sake of brevity.

In some implementations, the communication device 500 can specifically be the transmitting device in implementations of the present disclosure, and the communication device 500 can implement corresponding operations implemented by the transmitting device in various methods in implementations of the present disclosure, which is not repeated herein for brevity.

In some implementations, the communication device 500 can specifically be the receiving device in implementations of the present disclosure, and the communication device 500 can implement corresponding operations implemented by the receiving device in various methods in implementations of the present disclosure, which is not repeated herein for brevity.

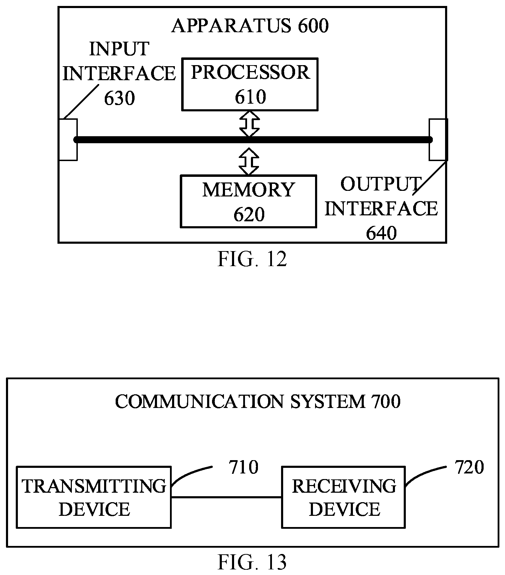

FIG. 12 is a schematic structural diagram of an apparatus according to implementations of the present disclosure. The apparatus 600 illustrated in FIG. 12 includes a processor 610. The processor 610 can invoke and execute a computer program stored in a memory, to implement the method in implementations of the present disclosure.

In some implementations, as illustrated in FIG. 12, the apparatus 600 can further include a memory 620. The processor 610 can invoke and execute a computer program stored in the memory 620, to implement the method in implementations of the present disclosure.

The memory 620 may be a separate device independent of the processor 610, or may be integrated into the processor 610.

In some implementations, the processor 610 can implement the function of a processing unit in a transmitting device, or the processor 610 can implement the function of a processing unit in a receiving device, which is not repeated herein for the sake of brevity.

In some implementations, the apparatus 600 can further include an input interface 630. The processor 610 can control the input interface 630 to communicate with other devices or chips, and specifically, to obtain information or data sent by other devices or chips. Optionally, the processor 610 may be disposed on a chip or off a chip.

In some implementations, the input interface 630 can implement the function of a communication unit in the transmitting device, or the input interface 630 can implement the function of a communication in the receiving device.

In some implementations, the apparatus 600 can further include an output interface 640. The processor 610 can control the output interface 640 to communicate with other devices or chips, and specifically, to output information or data to other devices or chips. Optionally, the processor 610 may be disposed on a chip or off a chip.

In some implementations, the output interface 640 can implement the function of a communication unit in the transmitting device, or the output interface 640 can implement the function of a communication in the receiving device.

In some implementations, the apparatus is applicable to the transmitting device in implementations of the present disclosure, and the apparatus can implement corresponding operations implemented by the transmitting device in various methods in implementations of the present disclosure, which is not repeated herein for brevity.

In some implementations, the apparatus is applicable to the receiving device in implementations of the present disclosure, and the apparatus can implement corresponding operations implemented by the receiving device in various methods in implementations of the present disclosure, which is not repeated herein for brevity.

It can be understood that the apparatus in implementations of the present disclosure can also be an SOC.

FIG. 13 is a schematic block diagram of a communication system 700 provided in implementations of the present disclosure. As illustrated in FIG. 13, the communication system 700 includes a transmitting device 710 and a receiving device 720.

The transmitting device 710 can be configured to implement corresponding functions implemented by the transmitting device in the foregoing method, and the receiving device 720 can be configured to implement corresponding functions implemented by the receiving device in the foregoing method, which is not repeated herein for brevity.

It can be understood that, the processor in implementations of the present disclosure can be an integrated circuit chip with signal processing capabilities. During implementation, each step of the foregoing method implementations can be completed by an integrated logic circuit of hardware in the processor or an instruction in the form of software. The processor can be a general-purpose processor, a digital signal processor (DSP), an ASIC, a field programmable gate array (FPGA), or other programmable logic devices, discrete gates or transistor logic devices, discrete hardware components. The methods, steps, and logic blocks disclosed in implementations of the present disclosure can be implemented or executed. The general-purpose processor can be a microprocessor, or the processor can be any conventional processor or the like. The steps of the method disclosed in implementations of the present disclosure can be directly implemented by a hardware decoding processor, or can be performed by hardware and software modules in the decoding processor. The software module can be located in a storage medium such as a random access memory (RAM), a flash memory, a read-only memory (ROM), a programmable ROM (PROM), or an electrically erasable programmable memory, registers, and the like. The storage medium is located in the memory. The processor reads the information in the memory, and completes the steps of the method described above with the hardware thereof.

It can be understood that, the memory in implementations of the present disclosure can be a volatile memory or a non-volatile memory, or can include both the volatile memory and the non-volatile memory. The non-volatile memory can be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It can be noted that, the memory of the systems and methods described in the present disclosure is intended to include, but is not limited to, these and any other suitable types of memory.

It can be understood that, the memory above is intended for illustration rather than limitation. For example, the memory in implementations of the present disclosure can also be an SRAM, a DRAM, an SDRAM, a DDR SDRAM, an ESDRAM, an SLDRAM, a DR RAM, etc. In other words, the memory in implementations of the present disclosure is intended to include, but is not limited to, these and any other suitable types of memory.

Implementations of the present disclosure further provide a computer-readable storage medium. The computer-readable storage medium is configured to store a computer program.

In some implementations, the computer-readable storage medium is applicable to the transmitting device in implementations of the present disclosure, and the computer program is operable with a computer to execute corresponding operations implemented by the transmitting device in various methods in implementations of the present disclosure, which is not repeated herein for brevity.

In some implementations, the computer-readable storage medium is applicable to the receiving device in implementations of the present disclosure, and the computer program is operable with a computer to execute corresponding operations implemented by the receiving device in various methods in implementations of the present disclosure, which is not repeated herein for brevity.

Implementations of the present disclosure further provide a computer program product. The computer program product includes computer program instructions.

In some implementations, the computer program product is applicable to the transmitting device in implementations of the present disclosure, and the computer program instructions cause a computer to execute corresponding operations implemented by the transmitting device in various methods in implementations of the present disclosure, which is not repeated herein for brevity.

In some implementations, the computer program product is applicable to the receiving device in implementations of the present disclosure, and the computer program instructions cause a computer to execute corresponding operations implemented by the receiving device in various methods in implementations of the present disclosure, which is not repeated herein for brevity.

Implementations of the present disclosure further provide a computer program.

In some implementations, the computer program is applicable to the transmitting device in implementations of the present disclosure. The computer program, when executed on a computer, causes the computer to implement corresponding operations implemented by the transmitting device in various methods in implementations of the present disclosure, which is not repeated herein for brevity.

In some implementations, the computer program is applicable to the receiving device in implementations of the present disclosure. The computer program, when executed on a computer, causes the computer to implement corresponding operations implemented by the receiving device in various methods in implementations of the present disclosure, which is not repeated herein for brevity.

Those of ordinary skill in the art will appreciate that units and algorithmic operations of various examples described in connection with implementations of the present disclosure can be implemented by electronic hardware or by a combination of computer software and electronic hardware. Whether these functions are performed by means of hardware or software depends on the application and the design constraints of the associated technical solution. Those skilled in the art can use different methods with regard to each specific application to implement the described functionality, but such methods cannot be regarded as lying beyond the scope of the present disclosure.

It is evident to those skilled in the art that, for the sake of convenience and brevity, in terms of the specific working processes of the foregoing systems, apparatuses, and units, reference can be made to the corresponding processes in the foregoing method implementations, which is not repeated herein.

It is appreciated that the systems, apparatuses, and methods disclosed in implementations of the present disclosure can also be implemented in various other manners. For example, the above apparatus implementations are merely illustrative, e.g., the division of units is only a division of logical functions, and other manners of division can be available in practice, e.g., multiple units or assemblies can be combined or can be integrated into another system, or some features can be ignored or skipped. In other respects, the coupling or direct coupling or communication connection as illustrated or discussed can be an indirect coupling or communication connection through some interface, device, or unit, and can be electrical, mechanical, or otherwise.

Separated units as illustrated can or cannot be physically separated. Components displayed as units can or cannot be physical units, and can reside at one location or can be distributed to multiple networked units. Some or all of the units can be selectively adopted according to practical needs to achieve desired objectives of the present disclosure.

In addition, various functional units described in various implementations of the present disclosure can be integrated into one processing unit or can be present as the number of physically separated units, and two or more units can be integrated into one.

If the functions are implemented as software functional units and sold or used as standalone products, they can be stored in a computer-readable storage medium. Based on such an understanding, the essential technical solution, or the portion that contributes to the prior art, or part of the technical solution of the present disclosure can be embodied as software products. The computer software products can be stored in a storage medium and can include multiple instructions that, when executed, can cause a computer device, e.g., a personal computer, a server, a network device, etc., to execute some or all operations of the methods described in various implementations of the present disclosure. The above storage medium can include various kinds of media that can store program codes, such as a universal serial bus (USB) flash disk, a mobile hard drive, an ROM, an RAM, a magnetic disk, or an optical disk.

The foregoing elaborations are merely implementations of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

**Claims**

1. A method for channel state information (CSI) feedback, comprising:

   encoding, by a transmitting device, target CSI information according to a CSI feedback codebook, to obtain a target feedback bitstream; and
   transmitting, by the transmitting device, the target feedback bitstream; wherein
   the CSI feedback codebook is $K$ cluster centers obtained by clustering CSI samples in a first dataset, the first dataset comprises $S$ CSI samples, $K$ and $S$ are positive integers, $K=2^B<S$, and $B$ is a number of CSI feedback bits.

2. The method of claim 1, wherein
   each of the CSI samples in the first dataset is a full CSI matrix in a time domain, or each of the CSI samples in the first dataset is a full CSI matrix in a frequency domain, or each of the CSI samples in the first dataset is a matrix composed of eigenvectors obtained by performing eigenvalue decomposition (EVD) on a plurality of sub-bands of a full CSI matrix, respectively.

3. The method of claim 1 or 2, wherein the $K$ cluster centers are obtained by clustering in the following steps:

   performing normalization operation on each of the CSI samples in the first dataset;
   selecting randomly, from the first dataset, $K$ CSI samples as initial cluster centers; and
   repeating the following Step 1 and Step 2 $Q$ times to obtain the $K$ cluster centers, wherein $Q$ is a positive integer:

      Step 1, determining a cluster to which each of the CSI samples in the first dataset belongs; and
      Step 2, determining a cluster center corresponding to each cluster.

4. The method of claim 1 or 2, wherein the $K$ cluster centers are obtained by clustering in the following steps:

   performing normalization operation on each of the CSI samples in the first dataset;
   selecting randomly, from the first dataset, $K$ CSI samples as initial cluster centers; and
   repeating the following Step 1 and Step 2 until quantization errors of all the CSI samples in the first dataset are less than a first preset threshold, to obtain the $K$ cluster centers:

      Step 1, determining a cluster to which each of the CSI samples in the first dataset belongs; and
      Step 2, determining a cluster center corresponding to each cluster.

5. The method of claim 4, wherein

   each of the CSI samples in the first dataset is a full CSI matrix in a time domain, or each of the CSI samples in the first dataset is a full CSI matrix in a frequency domain; and

a quantization error of a CSI sample $H_i$ in the first dataset being less than the first preset threshold is determined based on the following formula, wherein $i = 1,..., S$:

$$\sum_{i=1}^{S} \|H_i - U_c^{\ i}\|_F < X;$$

wherein $c^i$ denotes a cluster to which the CSI sample $H_i$ belongs, $U_c^{\ i}$ denotes a cluster center corresponding to the cluster $c^i$, $X$ denotes the first preset threshold, and $\|\bullet\|_F$ denotes a Frobenius norm.

6. The method of claim 1 or 2, wherein the $K$ cluster centers are obtained by clustering in the following steps:

performing normalization operation on each of the CSI samples in the first dataset;
selecting randomly, from the first dataset, $K$ CSI samples as initial cluster centers; and
repeating the following Step 1 and Step 2 until similarities between all the CSI samples in the first dataset and corresponding cluster centers are greater than a second preset threshold, to obtain the $K$ cluster centers:

Step 1, determining a cluster to which each of the CSI samples in the first dataset belongs; and
Step 2, determining a cluster center corresponding to each cluster.

7. The method of claim 6, wherein

each of the CSI samples in the first dataset is a matrix composed of eigenvectors obtained by performing EVD on a plurality of sub-bands of a full CSI matrix, respectively; and
a similarity between a CSI sample $W_i$ in the first dataset and a corresponding cluster center being greater than the second preset threshold is determined based on the following formula, wherein $W_i = [w_{i,1},...,w_{i,Nsb}]^T \in C^{Nsb \times Nt}$, $i = 1,..., S$, $N_{sb}$ denotes a number of sub-bands, $N_t$ denotes a number of transmitting antenna ports, and $C$ denotes a set of complex numbers:

$$\sum_{i=1}^{S} \sum_{v=1}^{Nsb} \|w_{i,v}^{\ H} u_c^{\ i}{}_{,v}\|_F > Y;$$

wherein $v$ denotes a sub-band, $v = 1,..., N_{sb}$, $w_{i,v}^{\ H}$ denotes a conjugate transpose of a vector corresponding to the CSI sample $W_i$, $c^i$ denotes a cluster to which the CSI sample $W_i$ belongs, $u_c^{\ '}{}_{,v}$ denotes a vector corresponding to the sub-band $v$ in a cluster center $U_c^{\ i}$ corresponding to the cluster $c^i$, $U_c^{\ i} = [u_c^{\ i}{}_{,1},...,u_c^{\ i}{}_{,Nsb}] \in C^{Nsb \times Nt}$, $Y$ denotes the second preset threshold, $\Sigma$ denotes a summation operation, and $\|\bullet\|_F$ denotes a Frobenius norm.

8. The method of any one of claims 3 to 5, wherein

each of the CSI samples in the first dataset is a full CSI matrix in the time domain, or each of the CSI samples in the first dataset is a full CSI matrix in the frequency domain; and
performing normalization operation on each of the CSI samples in the first dataset comprises:

performing normalization operation on a CSI sample $H_i$ in the first dataset according to the following formula, wherein $i = 1,..., S$:

$$\|H_1\|_F = \|H_2\|_F = ... = \|H_S\|_F = 1;$$

wherein $\|\bullet\|_F$ denotes a Frobenius norm.

9. The method of claim 8, wherein determining the cluster to which each of the CSI samples in the first dataset belongs comprises:

determining a cluster to which the CSI sample $H_i$ in the first dataset belongs according to the following formula:

$$c^i = \mathrm{argmin}_{j=1,...,K} \|H_i - U_j\|_F;$$

wherein $c^i$ denotes the cluster to which the CSI sample $H_i$ belongs, $U_j$ denotes a $j$-th cluster center, $\mathrm{argmin}_{j=1,...,K} \|H_i - U_j\|_F$ denotes a value of $j$ when $\|H_i - U_j\|_F$ takes a minimum value, and $\|\bullet\|_F$ denotes a Frobenius norm.

10. The method of claim 8 or 9, wherein determining the cluster center corresponding to each cluster comprises:

determining a cluster center $U_j$ corresponding to a cluster $c^i$ according to the following formula, wherein $j = 1,..., K$:

$$U_j = (\textstyle\sum_{i=1}^{S} f\{c^i = j\} H_i) / (\textstyle\sum_{i=1}^{S} f\{c^i = j\});$$

wherein $c^i$ denotes a cluster to which the CSI sample $H_i$ belongs, $f\{c^i = j\}=1$ when $c^i = j$ holds, $f\{c^i = j\} = 0$ when $c^i = j$ does not hold, and $\Sigma$ denotes a summation operation.

11. The method of any one of claims 8 to 10, wherein encoding, by the transmitting device, the target CSI information according to the CSI feedback codebook, to obtain the target feedback bitstream comprises:

encoding, by the transmitting device, the target CSI information based on the following formula, to generate the target feedback bitstream:

$$b_1 = g(\text{argmin}_{j=1,...,K} \|H - U_j\|_F);$$

wherein $b_1$ denotes the target feedback bitstream, $H$ denotes the target CSI information, $U_j$ denotes a $j$-th cluster center among the $K$ cluster centers, $g(\bullet)$ denotes a mapping function between the $K$ cluster centers and a feedback bitstream of $B$ bits, $g(\bullet) \in \{0,1\}^B$, $\text{argmin}_{j=1,...,K} \|H - Uj\|_F$ denotes a value of $j$ when $\|H - U_j\|_F$ takes a minimum value, and $\|\bullet\|_F$ denotes a Frobenius norm.

12. The method of claim 3, 6, or 7, wherein

each of the CSI samples in the first dataset is a matrix composed of eigenvectors obtained by performing EVD on a plurality of sub-bands of a full CSI matrix, respectively; and
performing normalization operation on each of the CSI samples in the first dataset comprises:

performing normalization operation on a CSI sample $W_i$ in the first dataset according to the following formula, wherein $W_i = [w_{i,1},...,w_{i,Nsb}]^T \in C^{Nsb \times Nt}$, $i = 1,..., S$, $N_{sb}$ denotes a number of sub-bands, $N_t$ denotes a number of transmitting antenna ports, and $C$ denotes a set of complex numbers:

$$\|w_{i,1}\|_F = \|w_{i,2}\|_F = ... = \|w_{i,Nsb}\|_F;$$

wherein $\|\bullet\|_F$ denotes a Frobenius norm.

13. The method of claim 12, wherein determining the cluster to which each of the CSI samples in the first dataset belongs comprises:

determining a cluster to which the CSI sample $W_i$ in the first dataset belongs according to the following formula:

$$c^i = \text{argmax}_{j=1,...,K} \textstyle\sum_{v=1}^{Nsb} \|w_{i,v}^{H} u_{j,v}\|_F;$$

wherein $c^i$ denotes the cluster to which the CSI sample $W_i$ belongs, $w_{i,v}^{H}$ denotes a conjugate transpose of a vector corresponding to the CSI sample $W_i$, $u_{j,v}$ denotes a vector corresponding to a sub-band $v$ in a cluster center $U_j$, $U_j = [u_{j,1},...,u_{j,Nsb}]$, $\in C^{Nsb \times Nt}$, $\text{argmax}_{j=1,...,K} \Sigma^{Nsb}_{v=1} \|w_{i,v}^{H} u_{j,v}\|_F$ denotes a value of $j$ when $\Sigma^{Nsb}_{v=1} \|w_{i,v}^{H} u_{j,v}\|_F$ takes a maximum value, $\|\bullet\|_F$ denotes a Frobenius norm, and $\Sigma$ denotes a summation operation.

14. The method of claim 12 or 13, wherein determining the cluster center corresponding to each cluster comprises:

determining a cluster center $U_j$ corresponding to a cluster $c^i$ according to the following formula, wherein $i = 1,..., S$, and $j = 1,..., K$:

$$U_j = (\textstyle\sum_{i=1}^{S} f\{c^i = j\} W_i) / (\textstyle\sum_{i=1}^{S} f\{c^i = j\});$$

wherein $c^i$ denotes a cluster to which the CSI sample $W_i$ belongs, $f\{c^i = j\} = 1$ when $c^i = j$ holds, $f\{c^i = j\} = 0$ when $c^i = j$ does not hold, and $\Sigma$ denotes a summation operation.

15. The method of any one of claims 12 to 14, wherein encoding, by the transmitting device, the target CSI information according to the CSI feedback codebook, to obtain the target feedback bitstream comprises:

encoding, by the transmitting device, the target CSI information based on the following formula, to generate the target feedback bitstream:

$$b_2 = g(\text{argmax}_{j=1,\ldots,K} \sum\nolimits^{Nsb}_{v=1} \|w_v{}^H u_{j,v}\|_F);$$

wherein $b_2$ denotes the target feedback bitstream, $W$ denotes the target CSI information, $W = [w_1,\ldots,w_{Nsb}]^T \in C^{Nsb \times Nt}$, $w_v{}^H$ denotes a conjugate transpose of a vector corresponding to the target CSI information $W$, $u_{j,v}$ denotes a vector corresponding to a sub-band $v$ in a cluster center $U_j$ in the $K$ cluster centers, $U_j = [u_{j,1},\ldots,u_{j,Nsb}], \in C^{Nsb \times Nt}$, $g(\bullet)$ denotes a mapping function between the $K$ cluster centers and a feedback bitstream of $B$ bits, $g(\bullet) \in \{0,1\}^B$, $\text{argmax}_{j=1,\ldots,K} \Sigma^{Nsb}_{v=1} \|w_v{}^H u_{j,v}\|_F$ denotes a value of $j$ when $\Sigma^{Nsb}_{v=1} \|w_v{}^H u_{j,v}\|_F$ takes a maximum value, $\|\bullet\|_F$ denotes a Frobenius norm, and $\Sigma$ denotes a summation operation.

16. A method for channel state information (CSI) feedback, comprising:

receiving, by a receiving device, a target feedback bitstream; and
decoding, by the receiving device, the target feedback bitstream according to a CSI feedback codebook, to obtain a target CSI sample; wherein
the CSI feedback codebook is $K$ cluster centers obtained by clustering CSI samples in a first dataset, the first dataset comprises $S$ CSI samples, $K$ and $S$ are positive integers, $K=2^B<S$, and $B$ is a number of CSI feedback bits.

17. The method of claim 16, wherein
each of the CSI samples in the first dataset is a full CSI matrix in a time domain, or each of the CSI samples in the first dataset is a full CSI matrix in a frequency domain, or each of the CSI samples in the first dataset is a matrix composed of eigenvectors obtained by performing eigenvalue decomposition (EVD) on a plurality of sub-bands of a full CSI matrix, respectively.

18. The method of claim 16 or 17, wherein the $K$ cluster centers are obtained by clustering in the following steps:

performing normalization operation on each of the CSI samples in the first dataset;
selecting randomly, from the first dataset, $K$ CSI samples as initial cluster centers; and
repeating the following Step 1 and Step 2 $Q$ times to obtain the $K$ cluster centers, wherein $Q$ is a positive integer:

Step 1, determining a cluster to which each of the CSI samples in the first dataset belongs; and
Step 2, determining a cluster center corresponding to each cluster.

19. The method of claim 16 or 17, wherein the $K$ cluster centers are obtained by clustering in the following steps:

performing normalization operation on each of the CSI samples in the first dataset;
selecting randomly, from the first dataset, $K$ CSI samples as initial cluster centers; and
repeating the following Step 1 and Step 2 until quantization errors of all the CSI samples in the first dataset are less than a first preset threshold, to obtain the $K$ cluster centers:

Step 1, determining a cluster to which each of the CSI samples in the first dataset belongs; and
Step 2, determining a cluster center corresponding to each cluster.

20. The method of claim 19, wherein

each of the CSI samples in the first dataset is a full CSI matrix in a time domain, or each of the CSI samples in the first dataset is a full CSI matrix in a frequency domain; and
a quantization error of a CSI sample $H_i$ in the first dataset being less than the first preset threshold is determined based on the following formula, wherein $i = 1,\ldots,S$:

$$\sum\nolimits^{S}_{i=1} \|H_i - U_c{}^i\|_F < X;$$

wherein $c^i$ denotes a cluster to which the CSI sample $H_i$ belongs, $U_c{}^i$ denotes a cluster center corresponding to the cluster $c^i$, $X$ denotes the first preset threshold, and $\|\bullet\|_F$ denotes a Frobenius norm.

21. The method of claim 16 or 17, wherein the $K$ cluster centers are obtained by clustering in the following steps:

performing normalization operation on each of the CSI samples in the first dataset;
selecting randomly, from the first dataset, $K$ CSI samples as initial cluster centers; and
repeating the following Step 1 and Step 2 until similarities between all the CSI samples in the first dataset and corresponding cluster centers are greater than a second preset threshold, to obtain the $K$ cluster centers:

Step 1, determining a cluster to which each of the CSI samples in the first dataset belongs; and
Step 2, determining a cluster center corresponding to each cluster.

22. The method of claim 21, wherein

each of the CSI samples in the first dataset is a matrix composed of eigenvectors obtained by performing EVD on a plurality of sub-bands of a full CSI matrix, respectively; and
a similarity between a CSI sample $W_i$ in the first dataset and a corresponding cluster center being greater than the second preset threshold is determined based on the following formula, wherein $W_i = [w_{i,1},...,w_{i,Nsb}]^T \in C^{Nsb \times Nt}$, $i = 1,...,S$, $N_{sb}$ denotes a number of sub-bands, $N_t$ denotes a number of transmitting antenna ports, and $C$ denotes a set of complex numbers:

$$\sum\nolimits^{S}_{i=1} \sum\nolimits^{Nsb}_{v=1} \|w_{i,v}{}^H u_c{}^i{}_{,v}\|_F > Y;$$

wherein $v$ denotes a sub-band, $v = 1,...,N_{sb}$, $w_{i,v}{}^H$ denotes a conjugate transpose of a vector corresponding to the CSI sample $W_i$, $c^i$ denotes a cluster to which the CSI sample $W_i$ belongs, $u_c{}^i{}_{,v}$ denotes a vector corresponding to the sub-band $v$ in a cluster center $U_c{}^i$ corresponding to the cluster $c^i$, $U_c{}^i = [u_c{}^i{}_{,1}...,u_c{}^i{}_{,Nsb}] \in C^{Nsb \times Nt}$, $Y$ denotes the second preset threshold, $\Sigma$ denotes a summation operation, and $\|\bullet\|_F$ denotes a Frobenius norm.

23. The method of any one of claims 18 to 20, wherein

each of the CSI samples in the first dataset is a full CSI matrix in the time domain, or each of the CSI samples in the first dataset is a full CSI matrix in the frequency domain; and
performing normalization operation on each of the CSI samples in the first dataset comprises:

performing normalization operation on a CSI sample $H_i$ in the first dataset according to the following formula, wherein $i = 1,...,S$:

$$\|H_1\|_F = \|H_2\|_F = ... = \|H_S\|_F = 1;$$

wherein $\|\bullet\|_F$ denotes a Frobenius norm.

24. The method of claim 23, wherein determining the cluster to which each of the CSI samples in the first dataset belongs comprises:

determining a cluster to which the CSI sample $H_i$ in the first dataset belongs according to the following formula:

$$c^i = \mathrm{argmin}_{j=1,...,K} \|H_i - U_j\|_F;$$

wherein $c^i$ denotes the cluster to which the CSI sample $H_i$ belongs, $U_j$ denotes a $j$-th cluster center, $\mathrm{argmin}_{j=1,...,K} \|H_i - U_j\|_F$ denotes a value of $j$ when $\|H_i - U_j\|_F$ takes a minimum value, and $\|\bullet\|_F$ denotes a Frobenius norm.

25. The method of claim 23 or 24, wherein determining the cluster center corresponding to each cluster comprises:

determining a cluster center $U_j$ corresponding to a cluster $c^i$ according to the following formula, wherein $j = 1,...,K$:

$$U_j = (\textstyle\sum^{S}_{i=1} f\{c^i = j\} H_i) \,/\, (\textstyle\sum^{S}_{i=1} f\{c^i = j\});$$

wherein $c^i$ denotes a cluster to which the CSI sample $H_i$ belongs, $f\{c^i = j\}=1$ when $c^i = j$ holds, $f\{c^i = j\} = 0$ when $c^i = j$ does not hold, and $\Sigma$ denotes a summation operation.

26. The method of any one of claims 23 to 25, wherein decoding, by the receiving device, the target feedback bitstream according to the CSI feedback codebook, to obtain the target CSI sample comprises:

decoding, by the receiving device, the target feedback bitstream based on the following formula, to obtain the target CSI sample:

$$H = g^{-1}(b_1);$$

wherein $b_1 = g(\text{argmin}_{j=1,...,K} \|H - U_j\|_F)$, $b_1$ denotes the target feedback bitstream, $H$ denotes the target CSI information, $U_j$ denotes a $j$-th cluster center among the $K$ cluster centers, $g(\bullet)$ denotes a mapping function between the $K$ cluster centers and a feedback bitstream of $B$ bits, $g(\bullet) \in \{0,1\}^B$, $\text{argmin}_{j=1,...,K} \|H - U_j\|_F$ denotes a value of $j$ when $\|H - U_j\|_F$ takes a minimum value, and $\|\bullet\|_F$ denotes a Frobenius norm.

27. The method of claim 18, 20, or 21, wherein

each of the CSI samples in the first dataset is a matrix composed of eigenvectors obtained by performing EVD on a plurality of sub-bands of a full CSI matrix, respectively; and
performing normalization operation on each of the CSI samples in the first dataset comprises:

performing normalization operation on a CSI sample $W_i$ in the first dataset according to the following formula, wherein $W_i = [w_{i,1},...,w_{i,Nsb}]^T \in C^{Nsb \times Nt}$, $i = 1,...,S$, $N_{sb}$ denotes a number of sub-bands, $N_t$ denotes a number of transmitting antenna ports, and $C$ denotes a set of complex numbers:

$$\|w_{i,1}\|_F = \|w_{i,2}\|_F = ... = \|w_{i,Nsb}\|_F;$$

wherein $\|\bullet\|_F$ denotes a Frobenius norm.

28. The method of claim 27, wherein determining the cluster to which each of the CSI samples in the first dataset belongs comprises:

determining a cluster to which the CSI sample $W_i$ in the first dataset belongs according to the following formula:

$$c^i = \text{argmax}_{j=1,...,K} \textstyle\sum^{Nsb}_{v=1} \|w_{i,v}{}^H u_{j,v}\|_F;$$

wherein $c^i$ denotes the cluster to which the CSI sample $W_i$ belongs, $w_{i,v}{}^H$ denotes a conjugate transpose of a vector corresponding to the CSI sample $W_i$, $u_{j,v}$ denotes a vector corresponding to a sub-band $v$ in a cluster center $U_j$, $U_j = [u_{j,1},...,u_{j,Nsb}]$, $\in C^{Nsb \times Nt}$, $\text{argmax}_{j=1,...,K} \Sigma^{Nsb}_{v=1} \|w_{i,v}{}^H u_{j,v}\|_F$ denotes a value of $j$ when $\Sigma^{Nsb}_{v=1} \|w_{i,v}{}^H u_{j,v}\|_F$ takes a maximum value, $\|\bullet\|_F$ denotes a Frobenius norm, and $\Sigma$ denotes a summation operation.

29. The method of claim 27 or 28, wherein determining the cluster center corresponding to each cluster comprises:

determining a cluster center $U_j$ corresponding to a cluster $c^i$ according to the following formula, wherein $i = 1,...,S$, and $j = 1,...,K$:

$$U_j = (\textstyle\sum^{S}_{i=1} f\{c^i = j\} W_i) \,/\, (\textstyle\sum^{S}_{i=1} f\{c^i = j\});$$

wherein $c^i$ denotes a cluster to which the CSI sample $W_i$ belongs, $f\{c^i = j\}=1$ when $c^i = j$ holds, $f\{c^i = j\} = 0$ when $c^i = j$ does not hold, and $\Sigma$ denotes a summation operation.

30. The method of any one of claims 27 to 29, wherein decoding, by the receiving device, the target feedback bitstream according to the CSI feedback codebook, to obtain the target CSI sample comprises:

decoding, by the receiving device, the target feedback bitstream based on the following formula, to obtain the target CSI sample:

$$W = g^{-1}(b_2);$$

wherein $b_2 = g(\text{argma}_{j=1,\dots,K} \sum^{Nsb}_{v=1}\|w_{i,v}{}^H u_{j,v}\|_F)$, $W$ denotes the target CSI information, $W = [w_1,\dots,w_{Nsb}]^T \in C^{Nsb\times Nt}$, $b_2$ denotes the target feedback bitstream, $w_v{}^H$ denotes a conjugate transpose of a vector corresponding to the target CSI information $W$, $u_{j,v}$ denotes a vector corresponding to a sub-band $v$ in a cluster center $U_j$ in the $K$ cluster centers, $U_j = [u_{j,1},\dots,u_{j,Nsb}], \in C^{Nsb\times Nt}$, $g(\bullet)$ denotes a mapping function between the $K$ cluster centers and a feedback bitstream of $B$ bits, $g(\bullet) \in \{0,1\}^B$, $\text{argmax}_{j=1,\dots,K} \sum^{Nsb}_{v=1}\|w_v{}^H u_{j,v}\|_F$ denotes a value of $j$ when $\sum^{Nsb}_{v=1}\|w_v{}^H u_{j,v}\|_F$ takes a maximum value, $\|\bullet\|_F$ denotes a Frobenius norm, and $\Sigma$ denotes a summation operation.

31. A transmitting device, comprising:

a processing unit configured to encode target CSI information according to a CSI feedback codebook, to obtain a target feedback bitstream; and
a communication unit configured to transmit the target feedback bitstream; wherein
the CSI feedback codebook is $K$ cluster centers obtained by clustering CSI samples in a first dataset, the first dataset comprises $S$ CSI samples, $K$ and $S$ are positive integers, $K=2^B<S$, and $B$ is a number of CSI feedback bits.

32. A receiving device, comprising:

a communication unit configured to receive a target feedback bitstream; and
a processing unit configured to decode the target feedback bitstream according to a CSI feedback codebook, to obtain a target CSI sample; wherein
the CSI feedback codebook is $K$ cluster centers obtained by clustering CSI samples in a first dataset, the first dataset comprises $S$ CSI samples, $K$ and S are positive integers, $K=2^B<S$, and B is a number of CSI feedback bits.

33. A transmitting device, comprising:

a memory configured to store a computer program; and
a processor configured to invoke and execute the computer program stored in the memory, to cause the transmitting device to implement the method of any of claims 1 to 15.

34. A receiving device, comprising:

a memory configured to store a computer program; and
a processor configured to invoke and execute the computer program stored in the memory, to cause the receiving device to implement the method of any of claims 16 to 30.

35. A chip, comprising:
a processor configured to invoke and execute a computer program stored in a memory, to cause a device equipped with the chip to implement the method of any of claims 1 to 15, or to cause the device equipped with the chip to implement the method of any of claims 16 to 30.

36. A computer-readable storage medium configured to store a computer program which, when executed, is operable to implement the method of any of claims 1 to 15, or is operable to implement the method of any of claims 16 to 30.

37. A computer program product comprising computer program instructions which, when executed, are operable to implement the method of any of claims 1 to 15, or are operable to implement the method of any of claims 16 to 30.

38. A computer program which, when executed, is operable to implement the method of any of claims 1 to 15, or is operable to implement the method of any of claims 16 to 30.

**100**

FIG. 1

FIG. 2

INPUT LAYER

OUTPUT LAYER

HIDDEN LAYER

FIG. 3

INPUT LAYER   CONVOLUTIONAL LAYER   POOLING LAYER   CONVOLUTIONAL LAYER   POOLING LAYER   FULLY-CONNECTED LAYER   OUTPUT LAYER

FIG. 4

FIG. 5

28 X 28 = 784

ENCODER → CODE    COMPRESS INPUT OBJECT

TRAIN AND LEARN TOGETHER

CODE → DECODER    RECONSTRUCT ORIGINAL OBJECT

FIG. 6

FIG. 7

200

```
┌─────────────────────────┐                          ┌─────────────────────────┐
│  TRANSMITTING DEVICE    │                          │   RECEIVING DEVICE      │
└─────────────────────────┘                          └─────────────────────────┘
```

S210, TRANSMITTING DEVICE ENCODES TARGET CSI INFORMATION ACCORDING TO CSI FEEDBACK CODEBOOK, TO OBTAIN TARGET FEEDBACK BITSTREAM, WHERE CSI FEEDBACK CODEBOOK IS $K$ CLUSTER CENTERS OBTAINED BY CLUSTERING CSI SAMPLES IN FIRST DATASET, FIRST DATASET INCLUDES $S$ CSI SAMPLES, $K$ AND $S$ ARE POSITIVE INTEGERS, $K=2^B < S$, AND $B$ IS THE NUMBER OF CSI FEEDBACK BITS

S220, TRANSMITTING DEVICE TRANSMITS THE TARGET FEEDBACK BITSTREAM

S230, RECEIVING DEVICE RECEIVES TARGET FEEDBACK BITSTREAM

S240, RECEIVING DEVICE DECODES TARGET FEEDBACK BITSTREAM ACCORDING TO CSI FEEDBACK CODEBOOK, TO OBTAIN TARGET CSI SAMPLE

FIG. 8

```
┌───────────────────────────────────────┐
│       TRANSMITTING DEVICE             │
│                300                    │
│  ┌─────────────────────────────────┐  │
│  │     PROCESSING UNIT 310         │  │
│  └─────────────────────────────────┘  │
│                 │                     │
│  ┌─────────────────────────────────┐  │
│  │     COMMUNICATION UNIT          │  │
│  │            320                  │  │
│  └─────────────────────────────────┘  │
└───────────────────────────────────────┘
```

FIG. 9

RECEIVING DEVICE 400

COMMUNICATION UNIT
410

PROCESSING UNIT 420

FIG. 10

COMMUNICATION DEVICE 500

MEMORY
520

PROCESSOR
510

TRANSCEIVER
530

FIG. 11

APPARATUS 600

INPUT
INTERFACE
630

PROCESSOR
610

MEMORY
620

OUTPUT
INTERFACE
640

FIG. 12

COMMUNICATION SYSTEM 700

TRANSMITTING
DEVICE

710

RECEIVING
DEVICE

720

FIG. 13

## INTERNATIONAL SEARCH REPORT

International application No.

**PCT/CN2022/133321**

### A. CLASSIFICATION OF SUBJECT MATTER

H04L27/00(2006.01)i

According to International Patent Classification (IPC) or to both national classification and IPC

### B. FIELDS SEARCHED

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNABS, CNTXT, CNKI, VEN, WOTXT, EPTXT, USTXT, 3GPP: 信道状态信息, 反馈, 码本, 矩阵, 比特流, CSI, feedback, codebook, matrix, bit stream

### C. DOCUMENTS CONSIDERED TO BE RELEVANT

| Category* | Citation of document, with indication, where appropriate, of the relevant passages | Relevant to claim No. |
|---|---|---|
| A | CN 115088224 A (HUAWEI TECHNOLOGIES CO., LTD.) 20 September 2022 (2022-09-20) entire document | 1-38 |
| A | CN 107925454 A (HUAWEI TECHNOLOGIES CO., LTD.) 17 April 2018 (2018-04-17) entire document | 1-38 |
| A | CN 114142899 A (COMBA NETWORK SYSTEMS CO., LTD.) 04 March 2022 (2022-03-04) entire document | 1-38 |
| A | WO 2018028687 A1 (HUAWEI TECHNOLOGIES CO., LTD.) 15 February 2018 (2018-02-15) entire document | 1-38 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **04 August 2023** | **06 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/133321**

| Patent document cited in search report | | | Publication date (day/month/year) | Patent family member(s) | | | Publication date (day/month/year) |
|---|---|---|---|---|---|---|---|
| CN | 115088224 | A | 20 September 2022 | None | | | |
| CN | 107925454 | A | 17 April 2018 | EP | 3334055 | A1 | 13 June 2018 |
| | | | | EP | 3334055 | A4 | 26 September 2018 |
| | | | | US | 2018191410 | A1 | 05 July 2018 |
| | | | | WO | 2017031672 | A1 | 02 March 2017 |
| | | | | AU | 2015406856 | A1 | 15 March 2018 |
| | | | | AU | 2015406856 | B2 | 25 July 2019 |
| | | | | KR | 20180037037 | A | 10 April 2018 |
| | | | | KR | 102027075 | B1 | 30 September 2019 |
| | | | | BR | 112018003565 | A2 | 25 September 2018 |
| | | | | JP | 2018532290 | A | 01 November 2018 |
| | | | | JP | 6733938 | B2 | 05 August 2020 |
| CN | 114142899 | A | 04 March 2022 | None | | | |
| WO | 2018028687 | A1 | 15 February 2018 | None | | | |

Form PCT/ISA/210 (patent family annex) (July 2022)